# EUROPEAN PATENT SPECIFICATION

(11) **EP 4 061 134 B1**
(45) Date of publication and mention of the grant of the patent: **20.05.2026**
(21) Application number: 20888760.4
(22) Date of filing: 20.11.2020
(51) Int. Cl.: A01N 57/20, A01N 25/02, A01N 25/30, A01P 13/00

(54) **HERBICIDAL GLUFOSINATE COMPOSITION**
HERBIZIDE GLUFOSINATZUSAMMENSETZUNG
COMPOSITION HERBICIDE À BASE DE GLUFOSINATE

(30) Priority: 20.11.2019 AU 2019904382; 04.12.2019 AU 2019904592
(43) Date of publication of application: 28.09.2022
(73) Proprietor: Elders Toll Formulation Pty Ltd, Adelaide, South Australia, 5000 (AU)
(72) Inventor: PENTLAND, Philip, Altona, Victoria 3018 (AU); NEMARIC, Mathew, Altona, Victoria 3018 (AU); LE, Tung Ngoc, Altona, Victoria 3018 (AU); FLYNN, Anthony, Altona, Victoria 3018 (AU)
(74) Representative: Müller, Christian Stefan Gerd
(86) International application number: PCT/AU2020/051255
(87) International publication number: WO 2021/097530

(56) References cited:
- WO-A1-2017/196856
- WO-A1-2019/020283
- CN-A- 103 210 916
- CN-A- 109 438 071
- CN-B- 103 461 378
- US-A1- 2005 266 998
- US-A1- 2005 266 999
- US-A1- 2007 184 982
- US-A1- 2010 022 392
- US-A1- 2014 121 285
- US-A1- 2016 338 348
- US-A1- 2018 192 644

## Description

### Field

The invention relates to an aqueous concentrate of the herbicide glufosinate-ammonium and to its preparation and use in control of weeds.

### Background

Glufosinate-ammonium (ammonium salt of 2-amino-4-(hydroxy (methyl)phosphonoyl)butanoic acid) is a broad-spectrum herbicide that irreversibly inhibits glutamine synthetase. Application of the herbicide leads to reduced glutamine and elevated ammonia in plant tissues. This halts photosynthesis and results in plant death. Ammonium glufosinate is soluble in water and generally formulated as an aqueous soluble liquid concentrate (SL).

Glufosinate-ammonium is frequently provided as a racemate, however L-phosphinothricin is the active enantiomer (US 5420329) and formulations of the L-enantiomer have twice the herbicidal activity of the racemate.

A number of glufosinate solution concentrates are commercially available.

BASTA^{™} non-selective herbicide (manufactured by BASF following acquisition of the relevant business of Bayer) contains 18.02% by weight of glufosinate-ammonium and between 1 and 10% by weight of 1-methoxypropanol. Other components are not listed in the MSDS. With a formulation density of 1.11g/cm, this formulation contains 200.0 g/L glufosinate-ammonium.

EXILE^{™} herbicide (manufactured by Agricrop) contains 200g/L glufosinate-ammonium and approx. 110 g/L propyleneglycol monomethyl ether. Other components are not listed in the MSDS. The density at 20 °C is 1.11 g/ml.

FINALE^{™} herbicide (manufactured by Bayer) contains 13.5 % by weight of glufosinate-ammonium, greater than 25% of alkylether sulfate sodium salt, 1-15% 1-methoxy-2-propanol. Other components are not listed in the MSDS. The density is 1.11 g/ml at 20 °C, so that the *w*/*v* composition in terms of glufosinate-ammonium is 15% *w*/*v.*

RELY^{™} 280 (manufactured by Bayer) contains 24.5% by weight glufosinate-ammonium, 22.1% alkylethersulfate, 1% 1-methoxy-2-propanol and 6.2% alkylpolysaccharide. With a density of 1.15 g/ml at 20 °C, the *w*/*v* composition in terms of glufosinate-ammonium is 281 g/L.

A number of attempts have been made to increase glufosinate-ammonium loadings but the most highly concentrated composition fully disclosed is about 200 g/L glufosinate-ammonium. US 4,400,196 (1983) relates to a glufosinate-ammonium composition which recognises the improved efficacy provided by certain surfactants such as alkyl phenol polyglycol ethers but highlights the problem of poor stability in formulating liquid concentrates of glufosinate-ammonium, particularly the problem of phase separation with formation of solid or liquid deposits.

US 4,400,196 seeks to provide stable high concentration of the active to avoid the need to use 10 litres of concentrate per hectare of the 10% active concentrates available at that time. US 4,400,196 proposes a concentration of up to 30% active with the use of alcohol polyglycol ether sulfate and other surfactants. While high concentrations of glufosinate-ammonium are obtained in powder and granule form, the highest concentration of active in the liquid formulation is 20% by weight with the use of 15-35% by weight of water-miscible polar aprotic solvent.

US 5,258,358 (1993) seeks to reduce the use of organic solvents reported in EP-0048436 (the European equivalent of US 4,400,196) by including (C₈-C₁₄)alkyl glycosides in some cases with other surfactants.

The combination of active is again preferably 1 to 30% by weight with the maximum active concentration in fully disclosed compositions is18% by weight.

Australian patent 2007212521 recognises the need for high active concentration and refers to compositions with an active concentration of 20 to 35% by weight of active. However, the compositions disclosed contain 22% glufosinate-ammonium and problems are reported in formulating the composition with certain organic solvents, particularly, propylene glycol monomethyl ether, which is said to produce poor stability in 22% by weight concentration of the active as demonstrated in Comparative Examples 4-6.

Despite the recognised need for an aqueous concentrate of glufosinate ammonium, the reported concentrates which are shown to be stable contain no more than about 24.5% active.

Herbicide manufacturers and users prefer high loadings of herbicide in the liquid formulations (eg. higher weight/weight herbicidal content or higher grams/Litre herbicidal content). Higher loadings reduce the cost and inconvenience of storing and handling and allow the farmer to minimise the volume of concentrate required to cover an area of land.

In many instances, the challenge associated with making higher-loading solution formulations relates to the storage stability of the formulation. Concentrated solutions have a greater tendency to crystallise when cold, or to become excessively thick when cold. This may be referred to as the storage stability challenge.

The challenge associated with more highly-loaded solution compositions also relates to providing high bioefficacy in terms of the herbicidal bioefficacy per unit weight of active agent of the solution concentrate composition. In more highly-loaded compositions, bioefficacy per unit weight of active agent may decrease relative to more dilute solutions due to the reduced capacity to include surfactants and other adjuvants which play a role in enhancing efficacy of the active agent. This may be referred to as the bioefficacy challenge.

Adjuvants may be added to the spray tank shortly prior to spray application of a herbicide. However, adjuvant addition at this stage requires an additional measurement and mixing step to be performed on site and can result in inappropriate mixtures which compromise stability of efficacy of the composition. It is desirable for the concentrate to include the required adjuvants to provide storage stability and the required efficacy.

In formulating high loading of glufosinate both the storage stability challenge and bioefficacy challenge are faced.

As the loading of herbicide increases in a formulation, there is a "crowding-out" effect which results in a reduced capacity to accommodate adjuvants such as surfactants. In this case, a stable formulation with a high loading of active agent may be prepared but show a significant reduction in the bioefficacy per unit weight of active agent. This problem limits the loading level of herbicide that can be practically incorporated in a formulation.

US 2007/184982 and US 2010/022392 describe a liquid herbicidal composition comprising: a) 20 to 35 percent by weight, based on the total weight of the composition, of a water-soluble herbicidal ingredient; b) a C₁₂-C₁₆ alkyl ether sulfate; c) an organic solvent; and d) an alkyl polyglucoside. WO 2019/020283 relates to the use of compositions comprising L-glufosinate and/or salts thereof in a glufosinate tolerant field crop in foliar application, wherein the compositions contain less than 5 mol.-% of D-glufosinate and/or salts thereof, based on the total amount of L-glufosinate and salts thereof, under certain environmental conditions to achieve an increase in the control of harmful plants and/or a reduction of phytotoxicity in the tolerant field crop. US 2005/266999 discloses liquid aqueous crop protectant compositions comprising (a) one or more water-soluble active crop protectant ingredients (type (a) active ingredients); (b) if desired, one or more water-insoluble active crop protectant ingredients (type (b) active ingredients); (c) if desired, organic solvents; (d) nonionic, cationic, anionic and/or zwitterionic surfactants; (e) nonionic surfactants from the group of the alkylpolyglycosides; (f) inorganic salts from the group of ammonium salts; (g) if desired, other nonionic, anionic, cationic and/or zwitterionic surfactants; (h) if desired, other customary formulation assistants, and (i) water.

There is a need for high loadings of glufosinate-ammonium due to the advantage that higher loadings offer in packaging, transport, handling and preparation of spray solutions by the end user. There is a need to provide higher loading while addressing the storage stability challenge and the bioefficacy challenge.

### Summary

Accordingly, we provide an aqueous solution concentrate of glufosinate-ammonium comprising;
at least 28 wt%, preferably at least 30 wt%, glufosinate-ammonium;
at least one alkylether sulfate surfactant;
at least one alkyl glycoside; and
propylene glycol monomethyl ether; and
wherein the weight ratio of glufosinate-ammonium / water is at least 0.9, the weight ratio of alkyl glycoside / alkylether sulfate surfactant is 0.5 to 0.9 and the weight ratio of glufosinate-ammonium / propylene glycol monomethyl ether is 2.5 to 12.

The aqueous solution concentrate comprises water. The weight ratio of glufosinate-ammonium / water is typically no more than 1.5 The weight ratio of glufosinate-ammonium / water is a measure of the effectiveness of a relatively low water content in the composition of the invention. This relatively high preferred ratio of at least 0.9 has been found to be effective in allowing a high loading of glufosinate-ammonium to be achieved with good efficacy and stability. The reduced water content is also of significant practical importance as it minimizes the transport and handling costs and inconvenience imposed by the need for a high water content in prior art compositions of glufosinate-ammonium.

The aqueous solution concentrate comprises at least one alkyl glycoside. The alkyl glycoside is preferably a C₈₋₁₂ alkyl glycoside such as decylglycoside. The efficacy of the composition of may be judged by comparison with prior art compositions of ammonium glufosinate at equivalent application rates (grams glufosinate-ammonium per hectare (ha)) on common weeds found in the relevant crops. Efficacy of prior art compositions has relied to a significant extent on the presence of alkylether sulfate surfactant such as sodium lauryl ether sulfate. Increasing glufosinate-ammonium loadings leads to reduced efficacy unless the corresponding level of alkyl ether sulfate is increased to maintain the synergistic efficacy. However the resulting stability of the composition is significantly compromised. The bioefficacy challenge presented in attempting to increase the content of gufosinate ammonium has thus been problematic due to an inevitable compromise between poor stability with increased loadings of glufosinate-ammonium and reduced efficacy if other components are replaced or reduced. We have found that the use of relatively high amounts of alkyl glycoside with high loaded glufosinate-ammonium in the composition of the invention allows the water content to be minimized providing stability and no loss in efficacy with what was considered a sub-optimal content of alkyl ether sulfate surfactant synergist.

The weight ratio of glufosinate-ammonium / alkyl glycoside will preferably be at least 2. The weight ratio of glufosinate-ammonium / alkyl glycoside may be up to 5, preferably 2 to 4.5. The weight ratio of glufosinate-ammonium / alkyl glycoside is a measure of the effectiveness of alkyl glycoside in the composition of the invention. This relatively high preferred ratio of at least 2 has been found to be effective in providing high loading of glufosinate-ammonium while achieving good efficacy and stability. The reductions in water content arising from the balance with alkyl glycoside such as decyl glycoside may provide a weight ratio of alkyl glycoside to water in the range of 0.25 to 0.55, preferably from 0.30 to 0.50.

We have found that the content of propylene glycol monomethyl ether plays an important role in preserving efficacy and stability with the increase in glufosinate-ammonium loading. The weight ratio of glufosinate-ammonium / propylene glycol monomethyl ether is typically at least 3. The weight ratio of glufosinate-ammonium / propylene glycol monomethyl ether is a measure of the effectiveness of propylene glycol monomethyl ether in the composition of the invention. This relatively high weight ratio of at least 3 has been found to be effective in providing high loading of glufosinate-ammonium with good efficacy and stability. The weight ratio is preferably from 3 to 9.5, more preferably 7 to 9.

The aqueous solution concentrate comprises alkylether sulfate surfactant. The alkylether sulfate surfactant may be a C_{8 - 16} alkylether sulfate or salt thereof such as the sodium or potassium salt. Particularly preferred is sodium laurylether sulfate. The weight ratio of glufosinate-ammonium / alkylether sulfate surfactant is typically at least 1.2. The weight ratio of glufosinate-ammonium / alkylether sulfate surfactant is typically no more than 2.5. Despite the recognized synergy provided to glufosinate-ammonium activity by the alkylether sulfate we have found a reduced content to not compromise efficacy in the compositions of the invention. This relatively high preferred ratio of at least 1.2 has been found to be effective in providing high loading of glufosinate-ammonium while achieving good efficacy and stability.

The ratio of propylene glycol monomethyl ether to water has also been found to assist in achieving high loading of glufosinate-ammonium without compromise of efficacy. The ratio of propylene glycol monomethyl ether /water is preferably 0.08 to 0.75 and more preferably 0.1 to 0.6.

In a preferred set of embodiments, the aqueous solution concentrate comprises
28 wt% to 40 wt%, preferably 30 wt% to 40 wt%, glufosinate-ammonium;
3 wt% to 13 wt% propylene glycol monomethyl ether;
8 wt% to 20 wt%, decylglycoside;
12 wt% to 30 wt% sodium laurylether sulfate; and
20 wt% to 35 wt% water.

Typically, it is preferred that the weight ratio of active content to total surfactant is 0.7 to 1.25, preferably 0.7 to 1.2, more preferably 0.9 to 1.2.

The variation in the content of decyl glycoside and alkyl ether surfactant allows improved loading of glufosinate-ammonium while maintaining efficacy.' The weight ratio of decylglycoside / sodium laurylether sulfate is at least 0.5 such as at least 0.6. The weight ratio of decylglycoside / sodium laurylether sulfate is no more than 0.9 such as no more than 0.85 or no more than 0.8. In one set of embodiments the weight ratio of decylglycoside / sodium laurylether sulfate is 0.5 to 0.8 such as 0.6 to 0.8.

The invention further provides a method of controlling weeds comprising applying the aqueous solution concentrate of glufosinate-ammonium, optionally following dilution, to the weeds or locus of the weeds.

### Detailed Description

The ability to formulate a storage stable and highly efficacious aqueous solution concentrate of glufosinate-ammonium with such a high loading was not expected in view of the difficulties reported in the prior art. Further, despite the benefit of high loadings and use of glufosinate-ammonium for over 30 years the concentration in commercial products was limited to about 24.5 wt%. Much of the prior art relating to glufosinate-ammonium solution concentrates is concerned primarily with stability of the compositions. While stability is important, we have found that there is typically a very significant fall in efficacy per unit weight of glufosinate-ammonium with increased concentrations of glufosinate-ammonium. With a more stringent examination of efficacy at higher concentration the present applicant has found compositions which allow efficacy to be maintained at higher loadings without compromising stability.

The concentration of glufosinate-ammonium in the solution concentrate of the invention is generally in the range of 28wt% to 40 wt%, preferably 30 wt% to 40 wt% such as 30 wt% to 38 wt%, 30 wt% to 36 wt% or 30 wt% to 35 wt%. The term Glufosinate-ammonium is used herein to embrace both racemate and L-enantiomers except where specifically indicated. In one embodiment at least 80 % of the glufosinate is present as the L-enantiomer, preferably at least 90% such as at least 95% is present as the L-enantiomer.

The aqueous solution concentrate of glufosinate-ammonium will comprise water which, by virtue of the high concentration of other components, is in a limited concentration depending on the loading of other components. The weight ratio of glufosinate-ammonium / water is at least 0.9 such as at least 1.0. The weight ratio of glufosinate-ammonium / water is typically no more than 1.5 preferably no more than 1.3 such as no more than 1.2 or no more than 1. In one set of embodiments the weight ratio of glufosinate-ammonium / water is in the range of 0.9 to 1.5, preferably in the range of 1 to 1.3.

The aqueous solution concentrate comprises propylene glycol monomethyl ether. Despite the reference to difficulty in achieving stability with this solvent in the prior art we found that it allowed high loadings to be achieved with good stability and high efficacy, particularly in specific weight ratios opposite the active glufosinate-ammonium. The weight ratio of glufosinate-ammonium / propylene glycol monomethyl ether is at least 2.5 preferably at least 3, more preferably at least 3.5, still more preferably at least 4 such as at least 4.5, at least 5 at least 5.5, at least 6, at least 6.5 or at least 7. The weight ratio of glufosinate-ammonium / propylene glycol monomethyl ether is no more than 12, preferably no more than 11, more preferably no more than 10.5 such as no more than 10. In one set of embodiments the weight ratio of glufosinate-ammonium / propylene glycol monomethyl ether is in the range of 3 to 12, preferably 4 to 10. This was not expected as Examples 4 to 6 of Australian Patent 200721252, which are comparison examples, not of the invention, demonstrate that compositions containing propylene glycol monomethyl ether show phase separation and are presumed to be unsuitable even at a relatively low active loading of 22wt% glufosinate-ammonium.

The alkyl glycoside is preferably a C₈₋₁₂ alkyl glycoside such as decylglycoside. The weight ratio of glufosinate-ammonium / alkyl glycoside is typically at least 2, preferably at least 2.5 such as at least 2.8 or at least 3. Typically the weight ratio of glufosinate-ammonium / alkyl glycoside is no more than 5, preferably no more than 4.5 and more preferably no more than 4 such as no more than 3.3 or no more than 3.5. In one set of embodiments the weight ratio of glufosinate-ammonium / alkyl glycoside in the range 2 to 5, preferably 2.5 to 3.5 such as 2.8 to 3.3. Alkyl glycosides such as decyl glycoside are often sold in the form of an aqueous concentrate of, for example, 70 wt% decyl glycoside and the amount referred to herein is the amount of alkyl glycoside rather than the amount of concentrate including water. The water content, if any, of an alkyl glycoside composition is considered to contribute to the total water concentration of the solution concentrate of glufosinate-ammonium.

The aqueous solution concentrate comprises alkylether sulfate surfactant. The alkylether sulfate surfactant may be a C_{8 - 16} alkylether sulfate or salt thereof such as the sodium or potassium salt. Particularly preferred is the sodium salt and most preferably, sodium laurylether sulfate. The weight ratio of glufosinate-ammonium / alkylether sulfate surfactant is typically at least 1, preferably at least 1.2, more preferably at least 1.3 such as at least 1.5. The weight ratio of glufosinate-ammonium / alkylether sulfate surfactant is typically no more than 3 preferably no more than 2.5, more preferably no more than 2.1 such as no more than 1.7. In one set of embodiments the weight ratio of glufosinate-ammonium / alkylether sulfate surfactant in the range 1.2 to 2.5, preferably 1.5 to 2.1.

The weight ratio of alkyl glycoside surfactant to alkylether sulfate surfactant is at least 0.5, preferably at least 0.55 such as at least 0.6 or at least 0.65. The weight ratio of alkyl glycoside surfactant to alkylether sulfate surfactant is no more than 0.9, such as no more than 0.85, no more than 0.8, no more than 0.75 or no more than 0.7. In one set of embodiments the weight ratio of alkyl glycoside surfactant to alkylether sulfate surfactant is 0.5 to 0.8.

Alkylether sulfates such as sodium laurylether sulfate (SLES) are often sold as an aqueous concentrate of, for example,70 wt%. The amount referred to herein is the amount of alkylether sulfate concentrate not including any water present in the composition of the alkylether sulfate. The water content, if any, of alkylether sulfate such as SLES composition is considered contribute to the total water concentration of the solution concentrate of glufosinate-ammonium.

In one set of embodiments the weight ratio of propyleneglycol monomethyl ether to water is less than 0.75, preferably less than 0.6, such as less than 0.55. The weight ratio of propyleneglycol monomethyl ether to water is typically at least 0.08 such as at least 0.1.

In one embodiment the concentrate composition has a viscosity at 20° C of no more than 3000 mPa·s (3000 cP), preferably no more than 1000 mPa·s (1000 cP), more preferably no more than 750 mPa·s (750 cP) such as no more than 500 mPa·s (500 cP) or no more than 400 mPa·s (400 cP). The viscosity may be provided by a viscosity-thinning agent such as selected from the group comprising ammonia, urea, ethanol, propanol and nitrate salts at a total concentration in the range 0.8 wt% to 6.5 wt%, preferred in the range 1.5 wt% to 4 wt%. The preferred viscosity thinning agent is a low-alkyl alcohol.

The low-alkyl alcohol is typically present in an amount of no more than 5 wt%, preferably no more than 4.5 wt%, such as no more than 4.0 wt%, no more than 3.5 wt%, no more than 3 wt%. Typically, it is preferred that low-alkyl alcohol is present in an amount of at least 0.8 wt% such as at least 1.5 wt%, at least 2.0 wt%. The low-alkyl alcohol is typically a C₁₋₄ alkyl alcohol, more preferably ethanol, isopropanol or a mixture thereof and most preferably is ethanol.

In one embodiment, the weight ratio of decyl glycoside / sodium laurylether sulfate is typically in the range of 0.5 to 0.8.

The composition may, and generally will contain additional adjuvants. Examples of preservatives include 1,2-benzisothiazolin-3-one (BIT), 2-bromo-nitropropan-1,3-diol (BNP) or mixture there (commercially available as PROXEL^{™}). Antifoam may be used such as a mixture of tridecanol ethoxylate branched with 3-5 EO units; alpha-octadecyl-omega-hydroxy-polyglycol ether and C₈₋₁₄ alkyl sulfate ammonium salt; siloxane and silicone antifoams or mixture thereof such as available under the tradename SILFOAM^{™} siloxane and/or silicone anti-foams are preferred. Typically, the additional components will be no more than 5 wt%.

The presence of surfactant, particularly alkylether sulfate surfactant, such as SLES, in the prior art was considered to significantly enhance activity. It was therefore surprising to find that high loadings of glufosinate-ammonium with reduced ratio of surfactant to active exhibited efficacy comparable with compositions with half the loading of active glufosinate-ammonium when applied at the same rate of active per unit area.

The solution concentrate composition may, in a more specific embodiment comprise;
28 wt% to 40 wt%, preferably 30 wt% to 40 wt%, glufosinate-ammonium;
3 wt% to 13 wt% propylene glycol monomethyl ether;
8 wt% to 20 wt% decylglycoside;
12 wt% to 30 wt% sodium laurylether sulfate; and
20 wt% to 35 wt% water.

In a further specific embodiment the solution concentrate composition comprises:
30 wt% to 40 wt% glufosinate-ammonium;
3 wt% to 10 wt% propylene glycol monomethyl ether;
8 wt% to 16 wt%, preferably 9 wt% to 16 wt%, decylglycoside;
14 wt% to 26.5wt% sodium laurylether sulfate; and
23 wt% to 35 wt% water.

In the above specific embodiments, the glufosinate-ammonium concentration may be 30 wt% to 35 wt% of the solution concentrate composition.

In further specific embodiments the solution concentrate composition comprises
30 wt% to 35 wt% glufosinate-ammonium;
3.5 wt% to 4 wt% propylene glycol monomethyl ether;
8 wt% to 12 wt%, preferably 9 wt% to 12 wt%, decylglycoside;
15 wt% to 20 wt% sodium laurylether sulfate;
25 wt% to 33 wt% water;
optionally ethanol in an amount of up to 5wt%; and
optionally siloxane antifoam agent in an amount of up to 1.5 wt%.

The invention further comprises a method of controlling weeds comprising applying to the weeds a composition as hereinbefore described, optionally following dilution of the concentrate with water. The composition is highly efficacious against a wide range of weeds which may be controlled using glufosinate ammonium and despite the higher loading and reduced level of synergistic alkyl ether sulfate surfactant the control of weeds is at least comparable with commercial formulations containing, what was reportedly an optimum ratio of active and synergistic alkyl ether sulfate surfactant. The composition of the invention is particularly useful in control of one or more weeds selected from the group consisting of annual ryegrass, sowthistle, volunteer wheat, couch grass, barnyard grass and wild radish.

Throughout the description and the claims of this specification the word "comprise" and variations of the word, such as "comprising" and "comprises" is not intended to exclude other additives, components, integers or steps.

Where used herein the abbreviation "wt%" is used as an abbreviation for parts by mass expressed as a percentage of the total mass.

The specification and claims refer to the weight ratio glufosinate-ammonium to certain other components such as the weight ratio glufosinate-ammonium / propylene glycol monomethyl ether, glufosinate-ammonium / alkyl glycoside, glufosinate-ammonium / alkylether sulfate or glufosinate-ammonium / water. These weight ratios are determined by dividing the concentration of glufosinate-ammonium in the composition (such as the wt% concentration) by the concentration of other component (such as the wt% concentration of the other component). For example, where the glufosinate-ammonium and a component such as propylene glycol monomethyl ether are present in equal concentrations in wt% the weight ratio glufosinate-ammonium / propylene glycol monomethyl ether is 1.

The term "alkyl glycoside" refers to an alkylsubstituted D-glycopyranosides. Typically, the alkyl substituents range from 8 to 12 carbons in length, preferably 8 to 10 carbon atoms in length, and the D-glycopyranosides are selected from the group consisting of glucose-type mono-, di-, tri-, oligo-, or polysaccharides. A degree of polymerization of 2 means the di-glucose (disaccharide), maltose. The alkyl glycoside may be simply named "glucosides." Although these ingredients are most likely the beta-anomers, the names of these alkyl glycosides are not necessarily specific to either anomer.

The abbreviation g/L refers to the concentration of the component in grams per litre of the concentrate compositions unless otherwise stated.

The invention will now be described with reference to the following examples. It is to be understood that the examples are provided by way of illustration of the invention and that they are in no way limiting to the scope of the invention.

### Examples

Composition were prepared using the following components listed in Table 1 in preparation of aqueous concentrates of glufosinate-ammonium.

**Table 1. Components**

| **component** | **function** | **CAS number** | **Example of commercial brand name** |
|---|---|---|---|
| Glufosinate-ammonium | herbicide | CAS # 77182-82-2 | |
| Propylene glycol monomethyl ether = methyl glycol | Water-soluble solvent | CAS #107-98-2 | Arcosolv PM |
| Sodium laurylether sulfate | Adjuvant, anionic surfactant | CAS #68585-43-2 | Agnique SLES 270T (70% aq soln) |
| Decyl glycoside | Adjuvant, nonionic surfactant | CAS #68515-73-1 | Multitrope 1620 LQ (70% aq soln) |

### Comparative Examples 1 to 3 (CE1, CE2, CE3)

**Table 2. Formulations to Explore the Bioefficacy**

| The Compositions of Table 2 were prepared to examine the effect of increasing the loading of glufosinate-ammonium above the 20 wt% loading used in commercial formulations. Bioefficacy is measured and reported below the composition details. | | | |
|---|---|---|---|
| **component** | **CE1** | **CE2** | **CE3** |
| | wt% | wt% | wt% |
| Glufosinate-ammonium | 20% | 30% | 35% |
| | | | |
| Methyl glycol | 11% | 11% | 11% |
| | | | |
| SLES | 23% | 23% | 23% |
| | | | |
| water | 46% | 36% | 31% |
| | | | |
| Bioefficacy (application rate of glufosinate-ammonium to achieve 50% reduction in biomass | 400g/L | 600g/L | 800g/L |

The bioefficacy results in Table 2 show that by replacing water with amounts of glufosinate-ammonium, the bioefficacy of compositions is severely compromised. The 35 wt% glufosinate-ammonium formulation (per unit weight of glufosinate-ammonium) is about halved in comparison with the 20% glufosinate-ammonium formulation, i.e. 800g/L rather than 400 g/L of active agent is required to achieve 50 wt% biomass reduction.

It was found that the adequacy of the SLES (a bioefficacy enhancer) in an aqueous solution concentrate of glufosinate-ammonium can best be determined using a comparative bioefficacy test (e.g. a test to compare bioefficacy with a reference glufosinate-ammonium formulation that has been optimised for agrochemical use). Suitable comparative bioefficacy tests need to have the sensitivity to discriminate between formulations of somewhat different bioactivity (per unit weight of glufosinate-ammonium). Such bioefficacy tests typically involve an estimate of the rate of formulation required to achieve a 50% reduction in plant biomass. The use of test methods that measure only formulation application rates that achieve a high kill rate (i.e. high plant biomass reductions) is not suitable for comparative bioefficacy tests - this is because different formulations with somewhat different bioactivities (per unit load of glufosinate-ammonium) may both exhibit high biomass reductions in these tests (and appear falsely bioequivalent).

### Composition Examples 1 - 3

Table 3 provides examples of compositions according to the invention.

Compositions were prepared in accordance with the process of Example 4 by combining the components listed in the amounts as grams per litre (g/L) of concentrate composition.

**Table 3. (Composition Examples 1 - 3)**

| **Ingredient** | **Example 1 g/L** | **Wt%** | **Example 2 g/L** | **Wt%** | **Example 3 g/L** | **Wt%** |
|---|---|---|---|---|---|---|
| Glufosinate ammonium 95% technical | 421 (35.86 wt%) | 34.1 Active 1.7 other | 415 (34.10 wt%) | 32. Active 1.7 other | 415 (34.53 wt%) | 32.8 Active 1.7 other |
| Added water | 175 (14.5 wt%) | - | 156 (13 wt%) | - | 227 (19 wt%) | |
| Propylene glycol monomethyl ether (PGME) (Arcoslov) | 90 | 7.7 | 110 | 9 | 45 | 3.7 |
| Decyl glycoside as 70% aq conc | 200, containing 140 neat decyl glycoside and 60 water | 12 Decyl-glycos ide | 200, containing 140 neat decyl glycoside and 60 water | 12 Decylglycoside | 180, containing 126 neat decyl glycoside and 54 water | 10 |
| Sodium laurylether sulfate (SLES) as 70% aq conc | 275, containing 193 neat SLES and 82 water | 16.4 SLES | 333, containing 233 neat SLES and 100 water | 19.1 | 295, containing 206 neat SLES and 89 water | 17 |
| Proxel GXL 1,2-benzisothiazolin-3-one | 3 | 0.25 | 3 | 0.24 | 2.5 | 0.2 |
| ammonia | 10 | 0.85 | | | | |
| Ethanol | | | | | 30 | 2.4 |
| Silfoam Siloxane antifoam | | | | | 7.5 | 0.6 |
| Total weight of components to produce 1 litre of composition | 1174 | 100 | 1217 | 100 | 1202 | 100 |
| Cumulative water in 1 litre of formulation | 317 | 27 | 316 | 25.9 | 370 | 31 |

The following Table 4 lists the weight ratios (relative to glufosinate-ammonium) of the components of Examples 1 to 3 which were found to provide significantly enhanced efficacy at increased loadings of glufosinate-ammonium.

**Table 4. Weight ratios of components relative to glufosinate-ammonium in Examples 1 to 3**

| component | E1 (%) | **^{#}Weight ratio** | E2 (%) | **^{#}Weight ratio** | E3 (%) | **^{#}Weight ratio** |
|---|---|---|---|---|---|---|
| | | | | | | |
| Glufosinate-ammonium | 34 | **1** | 32 | **1** | 33 | **1** |
| PGME | 7.7 | **4.4** | 9 | **3.6** | 3.7 | **9** |
| SLES | 16 | **2.1** | 19 | **1.7** | 22 | **1.5** |
| Decyl glycoside | 12 | **2.8** | 12 | **2.7** | 10 | **3.3** |
| water | 27 | **1.3** | 26 | **1.2** | 31 | **1** |

| | | | | | | |
|---|---|---|---|---|---|---|
| # weight ratio refers to the (weight glufosinate-ammonium)/(weight of component) | | | | | | |

### Example 4: Formulation method

The composition of Example 3 of Table 3 is used for Bioefficacy testing and referred to below as EUR glufosinate 400.

1000L of the formulation of Example 1 was made using a Paddle mixer (Dispermat^{™} N1) and a 1200-L stainless steel heat-jacketed vessel.

Step 1: To the vessel was added Agnique^{™} SLES270T and Arcosolve^{™} PM. The paddle mixer was used until the liquor was homogeneous or for 15 minutes, whichever was longer.

Step 2: Whilst mixing, all required quantities of Silfoam^{™} SE 39, water, and Multitrope^{™} 1620LQ, and mixing was continued until homogeneous using the highest speed setting (a vortex forms in the liquor under stirring).

Step 3: Gradual addition of glufosinate-ammonium took place under agitation and mixing was continued until all solids were incorporated and completely wetted.

Step 4: The batch was heated to between 45 - 50° C, with continued mixing until complete dissolution or 1 hour, whichever was longer. Then the batch was sampled to check for undissolved particles and homogeneity. If either was found, mixing was continued for a further 30 mins with re-sampling.

Step 5: Proxel GXL was added to the batch with further mixing until complete dissolution or 10 minutes, whichever was longer.

Bioefficacy studies were carried out on formulation Example 3 in Table 2.

### Comparative Examples 4 to 6 (CE4 - CE6 not of the invention)

The following compositions were prepare using the method of Example 4 on laboratory scale and using the components in the amounts detailed in Table 5 below. The weight ratios of the components in compositions CE4 and CE6 relative to glufosinate-ammonium are shown in Table 6. The stability of the CE4 - CE6 compositions was examined and is recorded in Table 7.

**Table 5.**

| **Ingredient (parts)** | **CE4 g/L** | **Wt%** | **CE5 g/L** | **Wt%** | **CE6 g/L** | **Wt%** |
|---|---|---|---|---|---|---|
| Glufosinate ammonium 95% technical | 416.4 | 33 Active (+1.7 Other) | 416.4 | 33 Active (+1.7 Other) | 416.4 | 33 Active (1.7 Other) |
| water | 309.6 | 25.8 | 270 | 22 | 402 | 33.5 |
| Propylene glycol monomethy l ether (PGME) (Arcoslov) | 30 | 2.5 | - | - | 30 | 2.5 |
| Decyl glycoside (70% aq conc)) | 60 (contains 42 parts decyl glycoside neat and 18 parts water) | 3.5 | 60 (contains 42 parts decyl glycoside neat and 18 parts water) | 3.5 | 110 (contains 77 parts decyl glycoside neat and 33 parts water) | 6.4 |
| Sodium laurylether sulfate | 384, (corresponding to 269 parts | 22.4 | 358 (corresponding to 250 parts | 20.8 | 241 (corresponding to 169 parts | 14.1 |
| (70% aq conc) | SLES and 115 parts water) | | SLES and 108 parts water) | | SLES and 72 parts water) | |
| isopropanol | - | - | 36 | 3.0 | - | - |
| Dipropylene glycol | - | - | 60 | 5.0 | - | - |
| Total quantity of component s in 1 litre | 1200 | 100 | 1200 | 100 | 1199 | 100 |
| Total water | 442 g/L | 36.9 | 396g/L | 33.0 | 507 | 42.3 |

**Table 6. Comparison of Compositions and Weight ratios of components**

| **parameter** | **Ex 1** | **Ex 2** | **Ex 3** | | **CE 4** | **CE6** |
|---|---|---|---|---|---|---|
| | | | | | | |
| **Gluf-amm** | **34%** | **32%** | **32.8%** | | **33%** | **33%** |
| **impurity** | **1.7%** | **1.7%** | **1.7%** | | **1.7%** | **1.7%** |
| **PGME** | **7.7%** | **9%** | **3.7%** | | **2.5%** | **2.5%** |
| **Decyl glyc (no water)** | **12%** | **12%** | **10%** | | **3.5%** | **6.4%** |
| **SLES (No water)** | **16.4%** | **19.1%** | **17%** | | **22.4%** | **14.1%** |
| **proxel** | **0.25%** | **0.24%** | **0.2%** | | **-** | **-** |
| **ammonia** | **0.85%** | **-** | **-** | **in** | **-** | **-** |
| **ethanol** | **-** | **-** | **2.4%** | | **-** | **-** |
| **alc** | | | | | | |
| **silfoam** | | | **0.6%** | | | |
| | | | | | | |
| **All water** | **27%** | **25.9%** | **31%** | | **36.9%** | **42.3%** |
| | | | | | | |
| **Total %** | **99.9%** | **99.9%** | **99.4%** | | **100%** | **100%** |
| | | | | | | |
| **RATIOS** | | | | | | |
| **Gluf/PGME** | **4.4** | **3.6** | **8.9** | | **13.2** | **13.2** |
| **Gluf/decyl gly** | **2.8** | **2.7** | **3.3** | | **9.4** | **5.2** |
| **Decyl gly/SLES** | **0.73** | **0.63** | **0.59** | | **0.16** | **0.45** |
| **Decyl glyc/water** | **0.44** | **0.46** | **0.32** | | **0.097** | **0.15** |
| **Gluf/SLES** | **2.07** | **1.68** | **1.93** | | **1.47** | **2.3** |
| **Gluf/water** | **1.3** | **1.23** | **1.06** | | **0.89** | **0.78** |
| **PGME/water** | **0.29** | **0.35** | **0.12** | | **0.068** | **0.059** |
| **Gluf/total surfactant** | **1.2** | **1.03** | **1.2** | | **1.3** | **1.6** |

**Table 7. Observation notes for comparative examples:**

| Comparative example | Observation notes |
|---|---|
| CE4 | Result: Very hazy white liquid, undissolved solids. |
| CE5 | Result: Hazy amber liquid, approximately 50%v/v separation. |
| CE6 | Result: Hazy amber liquid, approximately 20%v/v phase separation. |
| | Note: as the ratio of decyl glycoside to SLES gets higher the formulation becomes more stable. |

The compositions CE4, CE5 and CE6 were thus found to have poor stability producing phase separation apparent as cloudiness and/or precipitation. In contrast composition Examples 1-3 of the invention in Table 3 showed no signs of cloudiness, precipitation or phase separation. The presence of a weight ratio of glufosinate-ammonium/PGME in the range 3 to 12 ratio and glufosinate ammonium/alkyl glycoside of 2-5 was found to be a significant advantage in enhancing stability of the composition high loadings of glufosinate-ammonium. The ratio of SLES to decyl glycoside also assisted stability.

### Example 6 - Efficacy example: barnyard grass

BASF Basta^{™} (formerly a Bayer product) Non-selective Herbicide (200 g/L glufosinate-ammonium) is a Group N herbicide solution concentrate for non-residual control of broadleaf and grass weeds.

The composition of the invention of Example 3 ("EUR glufosinate 400", 400 g/L glufosinate-ammonium) was compared with Basta^{™} Non-selective Herbicide in a study for effect on the vegetative vigour and growth of barnyard grass. Barnyard grass was chosen as Basta^{™}. Non-selective Herbicide is registered for its control, it is a summer weed that is difficult to control and it is a wide spread annual weed in the warmer parts of Australia.

The aim of this study was to compare the Formulation and Formulation times (X) Rate effect of Basta^{™} Non-selective Herbicide and EUR glufosinate 400, when foliar applied, at a range of rates up to and including the Basta^{™} Non-selective Herbicide label rate, on the vegetative vigour and biomass of barnyard grass.
- Eight herbicide rates and eight replicates were used for each treatment.
- Data was presented for four parameters; visual phytotoxicity at 7, 14 and 21DAT and plant fresh weight at 21 DAT.
- Data was presented for four parameters; visual phytotoxicity at 7, 14 and 21DAT, and plant fresh weight at 21DAT.
- All data was analysed using a factorial analysis of variance (FAOV).

The conclusions from this study were;
- A FAOV showed that at 7DAT, EUR glufosinate 400 was more efficacious at 800 and 1000 g ai/ha compared to Basta^{™} Non-selective Herbicide for visual effect on barnyard grass.
- A FAOV showed there was no difference between Formulation or Formulation X Rate interaction at 14 and 21DAT.
- A FAOV showed there was no difference between Formulation or Formulation X Rate for barnyard grass fresh weight at 21DAT.

Overall conclusion, by 14DAT both formulations were bioequivalent for efficacy on barnyard grass.

### Materials and Methods (barnyard grass)

### Test substances

**Table 8. Formulation ingredients**

| **Chemical Properties** | **EUR Glufosinate (example 3)** | **Basta Non-selective Herbicide** |
|---|---|---|
| Ingredients | Glufosinate-ammonium | Glufosinate-ammonium |
| Chemical Group | Group N | Group N |
| Formulation type | Soluble concentrate | Soluble concentrate |

Data supplied from MSDS
http://www.bayercropscience.com.au/resources/uploads/msds/file7342.pdf (accessed 25/08/16).

### Soil medium

The soil medium was Debco Premium Potting Mix (Australian Standard AS 3743) (contains NPK and micronutrients) (http://www.debco.com.au/products/all-purpose-potting-mixes/debco-premium-potting-mix).

### Target species

Basta ^{®} Non-selective Herbicide is registered for the control of barnyard grass. This is a common weed of vegetables, rotation crops, perennial crops, roadsides and disturbed areas across eastern Australia. It is very competitive and grows in summer. Based on these parameters it was selected to be the test species in this study

**Table 9. Plant species**

| **Common name** | **Family** | **Genus Species** | **Comment** |
|---|---|---|---|
| Barnyard Grass | Poaceae | *Echinochloa Crus-gali* | Field Collected-Murchison, Vic |

Seeds were kept in a dark, storeroom in sealed containers prior to being sown. None of the seeds received pre-sowing pesticide treatments.

### Sowing

On the 18th May 2016 (ODAS), three seeds were evenly placed around the soil surface taking care to ensure that seeds were not close to the side of the pot to avoid edge effects.

The herbicide treatments were applied thirty-three days after sowing (33DAS).

### Product Treatments (barnyard grass)

Eight rates of both EUR Glufosinate (400 g/L glufosinate ammonium see Example 3) and Basta Non-selective Herbicide were evaluated against an untreated control (UTC) for their effect on vigour and growth of the target plant species. The range extended from 5% to 100% of the proposed label rate.

**Table 10.**

| **No.** | **Treatment** | **Formulation (g ai/L)** | **Rate (g ai/ha)** | **Rate (mL/ha)** |
|---|---|---|---|---|
| 1. | Untreated Control | N/A | N/A | N/A |
| 2. | EUR Glufosinate | 400 | 50 | 125 |
| 3. | EUR Glufosinate | 400 | 100 | 250 |
| 4. | EUR Glufosinate | 400 | 200 | 500 |
| 5. | EUR Glufosinate | 400 | 300 | 750 |
| 6. | EUR Glufosinate | 400 | 400 | 1000 |
| 7. | EUR Glufosinate | 400 | 600 | 1500 |
| 8. | EUR Glufosinate | 400 | 800 | 2000 |
| 9. | EUR Glufosinate | 400 | 1000 | 2500 |
| 10. | Basta Non-selective Herbicide | 200 | 50 | 250 |
| 11. | Basta Non-selective Herbicide | 200 | 100 | 500 |
| 12. | Basta Non-selective Herbicide | 200 | 200 | 1000 |
| 13. | Basta Non-selective Herbicide | 200 | 300 | 1500 |
| 14. | Basta Non-selective Herbicide | 200 | 400 | 2000 |
| 15. | Basta Non-selective Herbicide | 200 | 600 | 3000 |
| 16. | Basta Non-selective Herbicide | 200 | 800 | 4000 |
| 17. | Basta Non-selective Herbicide | 200 | 1000 | 5000 |

The label rate for Basta Non-selective Herbicide is 5000 mL/ha (1000 g ai/ha).

### Herbicide Application Regimes (barnyard grass)

The herbicide treatments were applied at late tillering (33DAS).

**Table 11. Application timing and plant growth stage.**

| **Target species** | **Sowing date** | **Treatment date** | **Treatment timing** | **Growth stage at application** |
|---|---|---|---|---|
| | **(0DAS)** | **(0DAT)** | **(DAS)** | |
| Barnyard Grass | 18/05/2016 | 20/06/2016 | 33 | Late tillering (GS 24-28) |

| | | | | |
|---|---|---|---|---|
| DAS = Days after sowing, DAT = Days after treatment | | | | |

All herbicide treatments were applied using an indoor, enclosed, three nozzle track sprayer purpose designed to allow agricultural chemicals to be applied under Australian conditions.

The Basta Non-selective Herbicide label recommends an application volume of 300-500 L/ha, and the use of hollow cone nozzles for an adequate broadcast application.

The track sprayer was fitted with a 50 mesh in-line filter and 100 mesh nozzle filters. The Teejet^{®} Extended Range Flat Spray Tips XR11006 (110°) nozzles were spaced at 50 cm and set at 50 cm above the soil in the pots as recommended by the manufacturers to ensure double overlap of the spray (http://www.teejet.com/english/home/tech-support/nozzle-technical-information/nozzle-spacing-and-minimum-spray-heights.aspx .

The spray pressure was 2 bar (200kPa). The boom moved at a constant 6 kph along the track delivering 388 L/ha.

**Table 12. Herbicide application equipment and settings**

| **Application equipment** | **Settings** | **Basta Non-selective Herbicide label recommendations*** |
|---|---|---|
| Spray nozzles | T Jet XR11006 110° **flat spray** nozzles | Flat spray or cone nozzles |
| Spray pressure | 2 bar | Not provided |
| Application volume | 388 L/ha | 300-500 L/ha |
| Boom height | 50 cm | Not provided |
| Application speed | 6 km/hr | Not provided |

| | | |
|---|---|---|
| *Basta^{®} Non-selective Herbicide label (http://bayercropscience.com.au/resources/uploads/label/file10165.pdf?20168193718 9 | | |

### Growth Conditions (barnyard grass)

The seedlings were germinated and grown in a greenhouse with temperature maintained at 24±2°C. Plants were watered daily/as needed, with a handheld sprinkler with a shower fitting, to field capacity.

### Vigour and growth assessments

The barnyard grass was assessed for visual phytotoxicity at 7, 14 and 21DAT. This equated to 40, 47 and 54DAS.

The average fresh weight per barnyard grass seedling was measured at 21DAT (54DAS).

### Replication

There were eight replicates of each treatment.

### Statistical Analysis

The software package used for statistical analyses was ARM ^{©}2015 Gylling Data Management. Factorial analysis of variance tests were calculated to evaluate whether formulation differences existed (P ≤0.05). Fischer's Least Significant Difference (LSD) test, at a 5% level of accepted error, was used to determine between treatment differences.

### Results and Discussion - Barnyard Grass

All treatments were evaluated for phytotoxicity/percentage reduction in biomass at 7, 14 and 21DAT (40, 47 and 54DAS).

**Table 13. Factorial analysis of variance by formulation type, averaged across all rates, for phytotoxicity at 7, 14 and 21DAT.**

| **Product** | **Phytotoxicity (Visual reduction in biomass %)** | | | | | |
|---|---|---|---|---|---|---|
| | **7DAT** | | **14DAT** | | **21DAT** | |
| EUR Glufosinate | 27.4 | a | 48.2 | a | 60.4 | a |
| Basta Non-selective Herbicide | 23.4 | b | 48.2 | a | 60.7 | a |
| P-Value | 0.0040 | | 1.0000 | | 0.8487 | |
| LSD (5% error) | 2.7 | | N/A | | N/A | |
| CV | 31 | | 16 | | 14 | |

| | | | | | | |
|---|---|---|---|---|---|---|
| DAT = Days after treatment CV = Coefficient of variance N/A = not applicable as p>0.05 Treatment means in columns with the same letter are no significantly different at a 5% level of accepted error. | | | | | | |

**Table 14. Factorial analysis of variance for an interaction between Formulation and Rate, for phytotoxicity at 7, 14 and 21DAT (barnyard grass)**

| **Product** | **Rate (g ai/ha)** | **Phytotoxicity (Visual reduction in biomass %)** | | | | | |
|---|---|---|---|---|---|---|---|
| | | **7DAT** | | **14DAT** | | **21DAT** | |
| Untreated Control | Nil | 0.0 | | 0.0 | | 0.0 | |
| EUR Glufosinate | 50 | 0.0 | h | 0.6 | a | 3.1 | a |
| EUR Glufosinate | 100 | 1.9 | h | 8.1 | a | 13.8 | a |
| EUR Glufosinate | 200 | 6.3 | gh | 18.1 | a | 41.3 | a |
| EUR Glufosinate | 300 | 20.6 | f | 45.0 | a | 65.0 | a |
| EUR Glufosinate | 400 | 37.5 | de | 63.8 | a | 71.9 | a |
| EUR Glufosinate | 600 | 44.4 | cd | 80.0 | a | 95.6 | a |
| EUR Glufosinate | 800 | 53.1 | ab | 84.4 | a | 97.8 | a |
| EUR Glufosinate | 1000 | 55.6 | a | 85.6 | a | 94.9 | a |
| Basta Non-selective Herbicide | 50 | 0.0 | h | 1.3 | a | 6.3 | a |
| Basta Non-selective Herbicide | 100 | 0.0 | h | 5.6 | a | 13.8 | a |
| Basta Non-selective Herbicide | 200 | 13.8 | fg | 27.5 | a | 41.9 | a |
| Basta Non-selective Herbicide | 300 | 16.9 | f | 36.9 | a | 59.4 | a |
| Basta Non-selective Herbicide | 400 | 31.9 | e | 63.8 | a | 78.1 | a |
| Basta Non-selective Herbicide | 600 | 38.1 | de | 80.0 | a | 91.3 | a |
| Basta Non-selective Herbicide | 800 | 40.0 | cd | 84.4 | a | 96.3 | a |
| Basta Non-selective Herbicide | 1000 | 46.3 | bc | 86.3 | a | 98.6 | a |
| P-Value | | 0.0178 | | 0.1370 | | 0.4680 | |
| LSD (5% error) | | 7.7 | | N/A | | N/A | |
| CV | | 31 | | 16 | | 14 | |

| | | | | | | | |
|---|---|---|---|---|---|---|---|
| DAT = Days after treatment, CV = Coefficient of variance, N/A = not applicable as p>0.05, Treatment means in columns with the same letter are no significantly different at a 5% level of accepted error. | | | | | | | |

### 7DAT Visual phytotoxicity assessment (barnyard grass)

At 7DAT, EUR Glufosinate, averaged across all application rates, was more efficacious (mean 27.5% biomass reduction) than Basta Non-selective Herbicide (mean 23.4% biomass reduction) for phytotoxicity on barnyard grass. Similarly, there was a significant Formulation x Rate interaction for phytotoxicity on barnyard grass. At the two highest rates, 800 and 1000 g ai/ha, EUR Glufosinate was more efficacious than Basta Non-selective Herbicide for phytotoxicity on barnyard grass.

There was no phytotoxicity present on barnyard grass in the untreated control.

### 14DAT Visual phytotoxicity assessment (barnyard grass)

At 14DAT, averaged across all rates, there was no formulation difference for phytotoxicity on barnyard grass (means 48.2 % biomass reduction) ... The mean phytotoxicity of each formulation had increased since the 7DAT assessment.

There was no significant Formulation x Rate interaction for phytotoxicity on barnyard grass.

There was no phytotoxicity present on barnyard grass in the untreated control.

### 21DAT Visual phytotoxicity assessment (barnyard grass)

At 21DAT, averaged across all rate there was no formulation difference for phytotoxicity on barnyard grass (means 60.4-60.7 % biomass reduction). The mean phytotoxicity of each formulation had increased since the 14DAT assessment.

There was no significant Formulation x Rate interaction for phytotoxicity on barnyard grass.

There was no phytotoxicity present on barnyard grass in the untreated control.

**Table 15. Factorial analysis of variance by formulation type, across all rates, for plant fresh weight at 21DAT**

| **Product** | **Fresh weight (mean g)** | |
|---|---|---|
| | **21DAT** | |
| EUR Glufosinate | 17.23 | a |
| Basta Non-selective Herbicide | 16.95 | a |
| P-Value | 0.5860 | |
| LSD (5% error) | N/A | |
| CV | 19 | |

**Table 16. Factorial analysis of variance by formulation x rate, for plant fresh weight at 21DAT (barnyard grass)**

| **Product** | **Rate (g ai/ha)** | **Fresh weight (mean g)** | |
|---|---|---|---|
| | | **21DAT** | |
| Untreated Control | Nil | 31.89 | |
| EUR Glufosinate | 50 | 31.83 | a |
| EUR Glufosinate | 100 | 27.88 | a |
| EUR Glufosinate | 200 | 21.86 | a |
| EUR Glufosinate | 300 | 17.83 | a |
| EUR Glufosinate | 400 | 13.73 | a |
| EUR Glufosinate | 600 | 8.69 | a |
| EUR Glufosinate | 800 | 9.20 | a |
| EUR Glufosinate | 1000 | 8.07 | a |
| Basta Non-selective Herbicide | 50 | 29.64 | a |
| Basta Non-selective Herbicide | 100 | 25.93 | a |
| Basta Non-selective Herbicide | 200 | 23.54 | a |
| Basta Non-selective Herbicide | 300 | 15.74 | a |
| Basta Non-selective Herbicide | 400 | 15.20 | a |
| Basta Non-selective Herbicide | 600 | 9.33 | a |
| Basta Non-selective Herbicide | 800 | 8.21 | a |
| Basta Non-selective Herbicide | 1000 | 8.03 | a |
| P-Value | | 0.4556 | |
| LSD (5% error) | | N/A | |
| CV | | 19 | |

| | | | |
|---|---|---|---|
| DAT = Days after treatment, CV = Coefficient of variance, N/A = not applicable as p>0.05, Treatment means in columns with the same letter are no significantly different at a 5% level of accepted error. | | | |

### 21DAT Fresh Weight (barnyard grass)

The mean fresh weight of barnyard grass in the untreated control was 31.89 g.
There was no formulation difference, across all rates, for fresh weight of barnyard grass (means 16.95-17.23 g).

### Conclusion (barnyard grass)

The aim of this study was to compare the Formulation and Formulation x Rate interaction of Basta^{®} Non-selective Herbicide and EUR Glufosinate, when foliar applied, at a range of rates up to and including the Basta label rate, on the vegetative vigour and biomass of barnyard grass.

A factorial analysis of variance (FAOV) showed that at 7DAT, EUR Glufosinate was more efficacious at 800 and 1000 g ai/ha compared to Basta Non-selective Herbicide for visual effect on barnyard grass

A FAOV showed there was no difference between Formulation or Rormulation x Rate at 14 and 21DAT.

A FAOV showed there was no difference between Formulation or Formulation x Rate for barnyard grass fresh weight at 21DAT.

Overall conclusion, by 14DAT both formulations were equivalent for efficacy on barnyard grass

### Efficacy example: Couch grass

BASF Basta^{™} (formerly a Bayer product) Non-selective Herbicide (200 g/L glufosinate-ammonium) is a Group N herbicide for non-residual control of broadleaf and grass weeds.

EUR glufosinate 400 (400 g/L glufosinate-ammonium see Example 3) was compared with Basta^{™} Non-selective Herbicide in a study for effect on the vegetative vigour and growth of perennial couch grass.

Couch grass was chosen as Basta^{™} Non selective Herbicide is registered for its control, it is a perennial weed that is difficult to control and it is a wide spread in Australia the warmer regions of Australia.

The aim of this study was to compare the Formulation and Formulation X Rate effect of the two products on the vegetative vigour and biomass of the key test species at a range of rates up to and including the label rate.
- Eight herbicide rates and eight replicates were used for each treatment.
   - Data was presented on three parameters; visual phytotoxicity at 7, 14 and 21DAT.
   - All data was analysed using a factorial analysis of variance (FAOV).
   - Experiments on glufosinate efficacy are notoriously variable but in this trial the variability was comparatively low with the Coefficient of Variance being between 20 and 24%.

The conclusions from this study were;
- A factorial analysis of variance (FAOV) showed that when averaged across all application rates there was no difference between formulation, across all rates, at 7, 14 and 21DAT.
- A FAOV showed there was no interaction between Formulation and Rate at 7, 14 or 21DAT.

In conclusion, in this study Basta^{™} Non-selective Herbicide and EUR glufosinate 400 were bioequivalent for the control of Couch grass.

### Materials and Methods (Couch grass)

### Test substances

**Table 17. Formulation ingredients**

| **Chemical Properties** | **EUR Glufosinate (example 3)** | **Basta Non-selective Herbicide** |
|---|---|---|
| Ingredients | Glufosinate-ammonium | Glufosinate-ammonium |
| Chemical Group | Group N | Group N |
| Formulation type | Soluble concentrate | Soluble Concentrate |

### Data supplied from MSDS

http://www.bayercropscience.com.au/resources/uploads/msds/file7342.pdf (accessed 25/08/16)

### Soil medium

The soil medium was Debco Premium Potting Mix (Australian Standard AS 3743) (contains NPK and micronutrients) (http://www.debco.com.au/products/all-purpose-potting-mixes/debco-premium-potting-mix).

### Target species

Basta ^{®} Non-selective Herbicide is registered for the control of perennial couch grass. Also it is a serious world agriculture weed which is difficult to control and is present across all states of Australia

**Table 18. Plant species**

| **Common name** | **Family** | **Genus Species** | **Comment** |
|---|---|---|---|
| Perennial Couch grass | Poaceae | *Cynodon dactylon* | Field Collected as sod-Werribee, Vic |

### Sod collection

Sods were collected from a weed free, turf nursery site near Werribee, Victoria. The sods were trimmed to 5 cm depth and placed into trays (29 cm x 34 cm x 8 cm). The seedling trays had previously been lined with moist paper towel and a 3 cm layer of potting media was added to aid water retention.

The herbicide treatments were applied once the couch grass was established.

### Product Treatments (Couch grass)

Eight rates of both EUR Glufosinate (400 g/L glufosinate ammonium see Example 3) and Basta Non-selective Herbicide were evaluated against an untreated control (UTC) for their effect on vigour and growth of the target plant species. The range extended from 5% to 100% of the proposed label rate.

**Table 19. Treatment list and application rates (couch grass)**

| **No.** | **Treatment** | **Formulation (g ai/L)** | **Rate (g ai/ha)** | **Rate (mL/ha)** |
|---|---|---|---|---|
| 1. | Untreated Control | N/A | N/A | N/A |
| 2. | EUR Glufosinate | 400 | 50 | 125 |
| 3. | EUR Glufosinate | 400 | 100 | 250 |
| 4. | EUR Glufosinate | 400 | 200 | 500 |
| 5. | EUR Glufosinate | 400 | 300 | 750 |
| 6. | EUR Glufosinate | 400 | 400 | 1000 |
| 7. | EUR Glufosinate | 400 | 600 | 1500 |
| 8. | EUR Glufosinate | 400 | 800 | 2000 |
| 9. | EUR Glufosinate | 400 | 1000 | 2500 |
| 10. | Basta Non-selective Herbicide | 200 | 50 | 250 |
| 11. | Basta Non-selective Herbicide | 200 | 100 | 500 |
| 12. | Basta Non-selective Herbicide | 200 | 200 | 1000 |
| 13. | Basta Non-selective Herbicide | 200 | 300 | 1500 |
| 14. | Basta Non-selective Herbicide | 200 | 400 | 2000 |
| 15. | Basta Non-selective Herbicide | 200 | 600 | 3000 |
| 16. | Basta Non-selective Herbicide | 200 | 800 | 4000 |
| 17. | Basta Non-selective Herbicide | 200 | 1000 | 5000 |

The label rate for Basta Non-selective Herbicide is 5000 mL/ha (1000 g ai/ha).

### Herbicide Application Regimes

The herbicide treatments were applied to established couch grass.

**Table 20. Application timing and plant growth stage.**

| **Crop species** | **Growth stage at application** |
|---|---|
| Perennial couch grass | Established couch grass |

| | |
|---|---|
| DAS = Days after sowing, DAT = Days after treatment | |

All herbicide treatments were applied using an indoor, enclosed, three nozzle track sprayer purpose designed to allow agricultural chemicals to be applied under Australian conditions.

The Basta Non-selective Herbicide label recommends an application volume of 300-500 L/ha, and the use of hollow cone nozzles for an adequate broadcast application.

The track sprayer was fitted with a 50 mesh in-line filter and 100 mesh nozzle filters. The Teejet^{®} Extended Range Flat Spray Tips XR11006 (110°) nozzles were spaced at 50 cm and set at 50 cm above the soil in the trays as recommended by the manufacturers to ensure double overlap of the spray (http://www.teejet.com/english/home/tech-support/nozzle-technical-information/nozzle-spacing-and-minimum-spray-heights.aspx

The spray pressure was 2 bar (200kPa). The boom moved at a constant 6 kph along the track delivering 388 L/ha.

**Table 21. Herbicide application equipment and settings**

| **Application equipment** | **Settings** | **Basta Non-selective Herbicide label recommendations*** |
|---|---|---|
| Spray nozzles | T Jet XR11006 110° **flat spray** nozzles | Flat spray or cone nozzles |
| Spray pressure | 2 bar | Not provided |
| Application volume | 388 L/ha | 300-500 L/ha |
| Boom height | 50 cm | Not provided |
| Application speed | 6 km/hr | Not provided |

| | | |
|---|---|---|
| *Basta^{®} Non-selective Herbicide label (http://bayercropscience.com.au/resources/uploads/label/file10165.pdf?20168193718 9 | | |

### Growth Conditions (Couch grass)

After transplant the sods were kept in a temperature controlled greenhouse maintained at 24±2°C. After treatment all trays were returned to the greenhouse. Plants were watered daily/as needed, with a handheld sprinkler with a shower fitting, to field capacity.

### Vigour and growth assessments

The couch grass was assessed for visual phytoxicity at 7, 14 and 21DAT.

### Replication

There were eight replicates of each treatment.

### Statistical Analysis

The software package used for statistical analyses was ARM ^{©}2015 Gylling Data Management. Factorial analysis of variance tests were calculated to evaluate whether formulation differences existed (P ≤0.05). Fischer's Least Significant Difference (LSD) test, at a 5% level of accepted error, was used to determine between treatment differences.

### Results and Discussion (couch grass)

All treatments were evaluated for phytotoxicity/percentage reduction in biomass at 7, 14 and 21DAT.

**Table 22. Factorial analysis of variance by formulation type, averaged across all rates, for phytotoxicity at 7, 14 and 21DAT (Couch grass)**

| **Product** | **Phytotoxicity (mean visual reduction in biomass %)** | | | | | |
|---|---|---|---|---|---|---|
| | **7DAT** | | **14DAT** | | **21DAT** | |
| EUR Glufosinate | 30.2 | a | 39.8 | a | 54.6 | a |
| Basta Non-selective Herbicide | 27.8 | a | 39.0 | a | 53.5 | a |
| P-Value | 0.1007 | | | 0.6136 | 0.5644 | |
| LSD (5% error) | N/A | | N/A | | N/A | |
| CV | 22 | | 24 | | 20 | |

| | | | | | | |
|---|---|---|---|---|---|---|
| DAT = Days after treatment CV = Coefficient of variance N/A = not applicable as p>0.05 Treatment means in columns with the same letter are no significantly different at a 5% level of accepted error. | | | | | | |

**Table 23. Factorial analysis of variance by formulation x rate, for phytotoxicity at 7, 14 and 21DAT (couch grass)**

| **Product** | **Rate (g ai/ha)** | **Phytotoxicity (Visual reduction in biomass %)** | | | | | |
|---|---|---|---|---|---|---|---|
| | | **7DAT** | | **14DAT** | | **21DAT** | |
| Untreated Control | Nil | 0.0 | | 0.0 | | 0.0 | |
| EUR Glufosinate | 50 | 0.0 | a | 0.0 | a | 2.5 | a |
| EUR Glufosinate | 100 | 4.4 | a | 10.0 | a | 17.5 | a |
| EUR Glufosinate | 200 | 10.6 | a | 20.6 | a | 35.6 | a |
| EUR Glufosinate | 300 | 22.5 | a | 34.4 | a | 46.9 | a |
| EUR Glufosinate | 400 | 34.4 | a | 43.8 | a | 65.6 | a |
| EUR Glufosinate | 600 | 45.6 | a | 60.0 | a | 79.4 | a |
| EUR Glufosinate | 800 | 58.1 | a | 70.6 | a | 90.9 | a |
| EUR Glufosinate | 1000 | 66.3 | a | 79.4 | a | 98.6 | a |
| Basta Non-selective Herbicide | 50 | 0.0 | a | 0.0 | a | 0.0 | a |
| Basta Non-selective Herbicide | 100 | 3.8 | a | 6.9 | a | 11.9 | a |
| Basta Non-selective Herbicide | 200 | 16.9 | a | 26.9 | a | 40.0 | a |
| Basta Non-selective Herbicide | 300 | 19.4 | a | 31.9 | a | 48.1 | a |
| Basta Non-selective Herbicide | 400 | 24.4 | a | 36.9 | a | 61.3 | a |
| Basta Non-selective Herbicide | 600 | 41.9 | a | 56.9 | a | 75.6 | a |
| Basta Non-selective Herbicide | 800 | 52.5 | a | 70.6 | a | 92.5 | a |
| Basta Non-selective Herbicide | 1000 | 63.8 | a | 81.9 | a | 99.0 | a |
| P-Value | | 0.2635 | | 0.6740 | | 0.8763 | |
| LSD (5% error) | | N/A | | N/A | | N/A | |
| CV | | 22 | | 24 | | 20 | |

| | | | | | | | |
|---|---|---|---|---|---|---|---|
| DAT = Days after treatment CV = Coefficient of variance N/A = not applicable as p>0.05 Treatment means in columns with the same letter are no significantly different at a 5% level of accepted error. | | | | | | | |

### 7DAT Visual phytotoxicity assessment (couch grass)

At 7DAT, averaged across all application rates there was no difference in efficacy between the formulations (means 27.8-30.2 % biomass reduction).

There was no significant Formulation x Rate interaction, for phytotoxicity on couch grass).

There was no phytotoxicity present on couch in the untreated control.

### 14DAT Visual phytotoxicity assessment (couch grass)

At 14DAT, averaged across all rates, there was no difference in efficacy between the formulations for phytotoxicity on couch grass (means 39.-39.8 % biomass reduction). The mean phytotoxicity of each formulation had increased since the 7DAT assessment.

There was no significant formulation x rate difference, for phytotoxicity on couch grass.

There was no phytotoxicity present on couch in the untreated control.

### 21DAT Visual phytotoxicity assessment (couch grass)

At 21DAT, averaged across all rates, there was no difference in the efficacy of the formulations for phytotoxicity on couch grass (means 53.5-54.6 % biomass reduction). The mean phytotoxicity of each formulation, across all rates, had increased since the 14DAT assessment.

There was no significant Formulation x Rate interaction, for phytotoxicity on couch grass.

There was no phytotoxicity present on couch in the untreated control.

### Conclusion (couch grass)

The aim of this study was to compare the Formulation and Formulation x Rate interaction of Basta^{®} Non-selective Herbicide and EUR Glufosinate, when foliar applied, at a range of rates up to and including the Basta label rate, on the vegetative vigour and biomass of couch grass, collected as sod and grown in seedling trays.

A factorial analysis of variance (FAOV) showed there was no difference between formulation, across all rates, at 7, 14 and 21DAT.

A FAOV showed there was no difference between Formulation x Rate at 7, 14 or 21DAT.

Overall conclusion - EUR Glufosinate and Basta Non-selective Herbicide were equivalent for efficacy on couch grass.

### Efficacy example: Annual Ryegrass

Basta^{™} Non-selective Herbicide (200 g/L glufosinate-ammonium) is a Group N herbicide for non-residual control of broadleaf and grass weeds.

EUR glufosinate 400 (400 g/L glufosinate-ammonium see Example 3) was compared with Basta^{™} Non-selective Herbicide in a study for effect on the vegetative vigour and growth of annual ryegrass. Annual ryegrass was chosen as Basta^{™} Non-selective Herbicide is registered for its control and it is a very wide spread annual weed in Australia.

The aim of this study was to compare the Formulation and Formulation X Rate effect of Basta^{™} Non-selective Herbicide and EUR glufosinate 400, when foliar applied, at a range of rates up to and including the Basta^{™} Non-selective Herbicide label rate, on the vegetative vigour and biomass of annual ryegrass.
- Eight herbicide rates and eight replicates were used for each treatment,
- Data was presented for four parameters; visual phytotoxicity at 7, 14 and 21DAT and plant fresh weight at 21 DAT.
- Data was presented for four parameters; visual phytotoxicity at 7, 14 and 21DAT, and plant fresh weight at 21DAT.
- All data was analysed using a factorial analysis of variance (FAOV)

The conclusions from this study were;
- A factorial analysis of variance (FAOV) showed there was no difference between formulation, across all rates, at 7, 14 and 21DAT.
- A FAOV showed there was no interaction between Formulation and Rate at 7, 14 and 21DAT.
- A FAOV showed there was no difference between Formulation nor Formulation XRate for annual ryegrass fresh weight at 21DAT.

Overall conclusion: Basta^{™} non-selective Herbicide and EUR glufosinate 400 were equivalent for efficacy on annual ryegrass.

### Materials and Methods (annual ryegrass)

### Test substances

**Table 24. Formulation ingredients**

| **Chemical Properties** | **EUR Glufosinate** | **Basta non-selective Herbicide** |
|---|---|---|
| Ingredients | Glufosinate-ammonium | Glufosinate-ammonium |
| Chemical Group | Group N | Group N |
| Formulation type | Soluble concentrate | Soluble concentrate |

| | | |
|---|---|---|
| * Data supplied from MSDS http://www.bayercropscience.com.au/resources/uploads/msds/file7342.pdf | | |

### Soil medium

The soil medium was Debco Premium Potting Mix (Australian Standard AS 3743) (contains NPK and micronutrients) (http://www.debco.com.au/products/all-purpose-potting-mixes/debco-premium-potting-mix).

### Target species

Basta ^{®} non-selective Herbicide is registered for the control of annual ryegrass. Also, it is a major weed of winter crops and competes for nitrogen as early as the two leaf stage so can be highly detrimental to crop yields (HerbiGuide 'Annual Ryegrass').

**Table 25. Plant species**

| **Common name** | **Family** | **Genus Species** | **Comment** |
|---|---|---|---|
| Annual ryegrass | Poaceae | *Lolium rigidum* | Field collected from Little River, Victoria |

Seeds were kept in a dark, storeroom in sealed containers prior to being sown.

### Sowing

On the 18^{th} May 2016 (ODAS), seeds were evenly placed around the soil surface taking care to ensure that seeds were not close to the side of the pot to avoid edge effects.

The herbicide treatments were applied thirty three days after sowing (33DAS).

### Product Treatments (annual ryegrass)

Eight rates of both EUR Glufosinate (400 g/L glufosinate ammonium see Example 3) and Basta non-selective Herbicide were evaluated against an untreated control (UTC) for their effect on vigour and growth of the target plant species. The range extended from 5% to 100% of the proposed label rate.

**Table 26. Treatment list and application rates**

| **No.** | **Treatment** | **Formulation (g ai/L)** | **Rate (g ai/ha)** | **Rate (mL/ha)** |
|---|---|---|---|---|
| 1. | Untreated Control | N/A | N/A | N/A |
| 2. | EUR Glufosinate | 400 | 50 | 125 |
| 3. | EUR Glufosinate | 400 | 100 | 250 |
| 4. | EUR Glufosinate | 400 | 200 | 500 |
| 5. | EUR Glufosinate | 400 | 300 | 750 |
| 6. | EUR Glufosinate | 400 | 400 | 1000 |
| 7. | EUR Glufosinate | 400 | 600 | 1500 |
| 8. | EUR Glufosinate | 400 | 800 | 2000 |
| 9. | EUR Glufosinate | 400 | 1000 | 2500 |
| 10. | Basta non-selective Herbicide | 200 | 50 | 250 |
| 11. | Basta non-selective Herbicide | 200 | 100 | 500 |
| 12. | Basta non-selective Herbicide | 200 | 200 | 1000 |
| 13. | Basta non-selective Herbicide | 200 | 300 | 1500 |
| 14. | Basta non-selective Herbicide | 200 | 400 | 2000 |
| 15. | Basta non-selective Herbicide | 200 | 600 | 3000 |
| 16. | Basta non-selective Herbicide | 200 | 800 | 4000 |
| 17. | Basta non-selective Herbicide | 200 | 1000 | 5000 |

The label rate for Basta non-selective Herbicide is 5000 mL/ha (1000 g ai/ha).

### Herbicide Application Regimes

The herbicide treatments were applied at late tillering (21DAS).

**Table 27. Application timing and plant growth stage.**

| **Crop species** | **Sowing date** | **Treatment date** | **Treatment timing** | **Growth stage at application** |
|---|---|---|---|---|
| | **(0DAS)** | **(0DAT)** | **(DAS)** | |
| Annual ryegrass | 18/05/2016 | 20/06/2016 | 33 | Late Tillering (GS 24-28) |

| | | | | |
|---|---|---|---|---|
| DAS = Days after sowing, DAT = Days after treatment | | | | |

All herbicide treatments were applied using an indoor, enclosed, three nozzle track sprayer purpose designed to allow agricultural chemicals to be applied under Australian conditions.

The Basta non-selective Herbicide label recommends an application volume of 300-500 L/ha, and the use of hollow cone nozzles for an adequate broadcast application.

The track sprayer was fitted with a 50 mesh in-line filter and 100 mesh nozzle filters. The Teejet^{®} Extended Range Flat Spray Tips XR11006 (110°) nozzles were spaced at 50 cm and set at 50 cm above the soil in the pots as recommended by the manufacturers to ensure double overlap of the spray (http://www.teejet.com/english/home/tech-support/nozzle-technical-information/nozzle-spacing-and-minimum-spray-heights.aspx .

The spray pressure was 2 bar (200kPa). The boom moved at a constant 6 kph along the track delivering 388 L/ha.

**Table 28. Herbicide application equipment and settings**

| **Application equipment** | **Settings** | **Basta non-selective Herbicide label recommendations*** |
|---|---|---|
| Spray nozzles | T Jet XR11006 110° **flat spray** nozzles | Flat spray or cone nozzles |
| Spray pressure | 2 bar | Not provided |
| Application volume | 388 L/ha | 300-500 L/ha |
| Boom height | 50 cm | Not provided |
| Application speed | 6 km/hr | Not provided |

| | | |
|---|---|---|
| Basta^{®} non-selective Herbicide label (http://bayercropscience.com.au/resources/uploads/label/file10165.pdf?20168193718 9 | | |

### Growth Conditions (annual ryegrass)

Seedlings were germinated in a greenhouse where the temperature was maintained at 24±2°C for seven days before being moved outdoors.

After treatment all pots were returned to the greenhouse. The greenhouse temperature was maintained at 24±2°C. Plants were watered daily/as needed, with a handheld sprinkler with a shower fitting, to field capacity.

### Vigour and growth assessments

The annual ryegrass was assessed for visual phytotoxicity at 7, 14 and 21DAT. This equated to 40, 47 and 54DAS.

The average fresh weight per annual ryegrass seedling was measured at 21DAT (54DAS).

### Replication

There were eight replicates of each treatment.

### Statistical Analysis

The software package used for statistical analyses was ARM ^{©}2015 Gylling Data Management. Factorial analysis of variance tests were calculated to evaluate whether formulation differences existed. Fischer's Least Significant Difference (LSD) test, at a 5% level of accepted error, was used to determine between treatment differences.

### Results and Discussion - Annual Ryegrass

All treatments were evaluated for phytotoxicity/percentage reduction in biomass at 7, 14 and 21DAT (40, 47 and 54DAS).

**Table 29. Factorial analysis of variance by formulation type, averaged across all rates, for phytotoxicity at 7, 14 and 21DAT (annual Ryegrass)**

| **Product** | **Phytotoxicity (mean visual reduction in biomass %)** | | | | | |
|---|---|---|---|---|---|---|
| | **7DAT** | | **14DAT** | | **21DAT** | |
| EUR Glufosinate | 30.1 | a | 46.7 | a | 64.5 | a |
| Basta non-selective Herbicide | 31.2 | a | 45.1 | a | 66.2 | a |
| P-Value | 0.4761 | | 0.2112 | | 0.3324 | |
| LSD (5% error) | N/A | | N/A | | N/A | |
| CV | 27 | | 16 | | 14 | |

| | | | | | | |
|---|---|---|---|---|---|---|
| DAT = Days after treatment CV = Coefficient of variance N/A = not applicable as p>0.05 Treatment means in columns with the same letter are no significantly different at a 5% level of accepted error. | | | | | | |

**Table 30. Factorial analysis of variance for an interaction between Formulation and Rate, for phytotoxicity at 7, 14 and 21DAT**

| **Product** | **Rate (g ai/ha)** | **Phytotoxicity (mean visual reduction in biomass %)** | | | | | |
|---|---|---|---|---|---|---|---|
| | | **7DAT** | | **14DAT** | | **21DAT** | |
| Untreated Control | Nil | 0.0 | | 0.0 | | 0.0 | |
| EUR Glufosinate | 50 | 1.3 | a | 1.3 | a | 10.0 | a |
| EUR Glufosinate | 100 | 2.5 | a | 5.6 | a | 15.6 | a |
| EUR Glufosinate | 200 | 9.4 | a | 16.3 | a | 36.9 | a |
| EUR Glufosinate | 300 | 14.4 | a | 26.9 | a | 74.4 | a |
| EUR Glufosinate | 400 | 35.4 | a | 51.3 | a | 85.6 | a |
| EUR Glufosinate | 600 | 44.4 | a | 76.9 | a | 95.6 | a |
| EUR Glufosinate | 800 | 63.2 | a | 96.3 | a | 98.5 | a |
| EUR Glufosinate | 1000 | 70.6 | a | 99.4 | a | 99.6 | a |
| Basta non-selective Herbicide | 50 | 1.3 | a | 0.0 | a | 6.9 | a |
| Basta non-selective Herbicide | 100 | 7.5 | a | 5.0 | a | 15.0 | a |
| Basta non-selective Herbicide | 200 | 10.6 | a | 11.9 | a | 41.9 | a |
| Basta non-selective Herbicide | 300 | 15.6 | a | 21.9 | a | 79.4 | a |
| Basta non-selective Herbicide | 400 | 30.0 | a | 47.5 | a | 90.6 | a |
| Basta non-selective Herbicide | 600 | 51.3 | a | 80.0 | a | 96.3 | a |
| Basta non-selective Herbicide | 800 | 60.0 | a | 94.4 | a | 99.3 | a |
| Basta non-selective Herbicide | 1000 | 73.1 | a | 100.0 | a | 100.0 | a |
| P-Value | | 0.4870 | | 0.7953 | | 0.8895 | |
| LSD (5% error) | | N/A | | N/A | | N/A | |
| CV | | 27 | | 16 | | 14 | |

| | | | | | | | |
|---|---|---|---|---|---|---|---|
| DAT = Days after treatment CV = Coefficient of variance N/A = not applicable as p>0.05 Treatment means in columns with the same letter are no significantly different at a 5% level of accepted error. | | | | | | | |

### 7DAT Visual phytotoxicity assessment (annual ryegrass)

At 7DAT, averaged across all application rates there was no difference in efficacy between the formulations (means 30.1-31.2 % biomass reduction).

There was no significant Formulation x Rate interaction, for phytotoxicity on annual ryegrass.

There was no phytotoxicity present on annual ryegrass in the untreated control.

At 14DAT, averaged across all rates, there was no difference in efficacy between the formulations for phytotoxicity on annual ryegrass (means 45.1-46.7 % biomass reduction). The mean phytotoxicity of each formulation, across all rates, had increased since the 7DAT assessment.

There was no significant Formulation x Rate Interaction, for phytotoxicity on annual ryegrass.

There was no phytotoxicity present on annual ryegrass in the untreated control.

### 21DAT Visual phytotoxicity assessment (annual ryegrass)

At 21DAT, averaged across all rates, there was no formulation difference in phytotoxicity on annual ryegrass (means 64.5-66.2 % biomass reduction). The mean phytotoxicity of each formulation, across all rates, had increased since the 14DAT assessment.

At 21DAT, there was no Formulation x Rate interaction for phytotoxicity on annual ryegrass. The mean phytotoxicity of each formulation, across all rates, had increased since the 14DAT assessment.

There was no phytotoxicity present on annual ryegrass in the untreated control.

**Table 31. Factorial analysis of variance by formulation type, across all rates, for plant fresh weight at 21DAT (annual ryegrass)**

| **Product** | **Fresh weight (mean g)** | |
|---|---|---|
| | **21DAT** | |
| EUR Glufosinate | 6.94 | a |
| Basta non-selective Herbicide | 6.92 | a |
| P-Value | 0.9453 | |
| LSD (5% error) | N/A | |
| CV | 23 | |

**Table 32. Factorial analysis of variance by formulation x rate, for plant fresh weight at 21DAT (annual ryegrass).**

| **Product** | **Rate (g ai/ha)** | **Fresh weight (mean g)** | |
|---|---|---|---|
| | | **21DAT** | |
| Untreated Control | Nil | 11.28 | |
| EUR Glufosinate | 50 | 11.26 | a |
| EUR Glufosinate | 100 | 10.58 | a |
| EUR Glufosinate | 200 | 8.35 | a |
| EUR Glufosinate | 300 | 6.63 | a |
| EUR Glufosinate | 400 | 6.16 | a |
| EUR Glufosinate | 600 | 4.91 | a |
| EUR Glufosinate | 800 | 3.9 | a |
| EUR Glufosinate | 1000 | 3.70 | a |
| Basta non-selective Herbicide | 50 | 11.16 | a |
| Basta non-selective Herbicide | 100 | 11.00 | a |
| Basta non-selective Herbicide | 200 | 9.36 | a |
| Basta non-selective Herbicide | 300 | 6.84 | a |
| Basta non-selective Herbicide | 400 | 5.0 | a |
| Basta non-selective Herbicide | 600 | 4.51 | a |
| Basta non-selective Herbicide | 800 | 4.05 | a |
| Basta non-selective Herbicide | 1000 | 3.41 | a |
| P-Value | | 0.7082 | |
| LSD (5% error) | | N/A | |
| CV | | 23 | |

| | | | |
|---|---|---|---|
| DAT = Days after treatment, CV = Coefficient of variance, N/A = not applicable as p>0.05, Treatment means in columns with the same letter are no significantly different at a 5% level of accepted error. | | | |

### 21DAT Visual phytotoxicity assessment (annual ryegrass)

The mean fresh weight of annual ryegrass in the untreated control was 11.28 g

There was no formulation difference, across all rates, for fresh weight of annual ryegrass (means 6.92-6.94 g).

There was no significant Formulation x Rate difference, for fresh weight of annual ryegrass.

### Conclusion (annual ryegrass)

The aim of this study was to compare the formulation and formulation x rate interaction of Basta^{®} non-selective Herbicide and EUR Glufosinate,400 (Example 3) when foliar applied, at a range of rates up to and including the Basta label rate, on the vegetative vigour and biomass of annual ryegrass.

A factorial analysis of variance (FAOV) showed there was no difference between formulation, across all rates, at 7, 14 and 21DAT.

A FAOV showed there was no interaction between Formulation and Rate at 7, 14 and 21DAT.

A FAOV showed there was no difference between Formulation or Formulation x Rate for annual ryegrass fresh weight at 21DAT.

Overall conclusion: In this study Basta non-selective Herbicide and EUR glufosinate are bioequivalent for efficacy on annual ryegrass.

### Efficacy Example: Sowthistle

Basta^{™} Non-selective Herbicide (200 g/L glufosinate-ammonium) is a Group N herbicide solution concentrates for non-residual control of broadleaf and grass weeds.

EUR glufosinate 400 (400 g/L glufosinate-ammonium see Example 3) was compared with Basta^{™} Non-Selective Herbicide in a study for effect on the vegetative vigour and growth of sowthistle. Sow thistle was chosen as Basta^{™} Non-selective Herbicide is registered for its control, it is a weed that is difficult to control and it is a wide spread annual weed in Australia.

The aim of this study was to compare the Formulation and Formulation x Rate effect of Basta^{™} Non-selective Herbicide and EUR glufosinate 400, when foliar applied, at a range of rates up to and including the Basta^{™} Non-selective Herbicide label rate, on the vegetative vigour and biomass of sowthistle.
- Eight herbicide rates and eight replicates were used for each treatment,
- Data was presented for four parameters; visual phytotoxicity at 7, 14 and 21DAT and plant fresh weight at 21 DAT.
- Data was presented for four parameters; visual phytotoxicity at 7, 14 and 21DAT, and plant fresh weight at 21DAT.
- All data was analysed using a factorial analysis of variance (FAOV)

The conclusions from this study were;
- A FAOV showed that Basta^{™} Non-selective Herbicide was more efficacious than EUR glufosinate 400 on sowthistle at 7 days after treatment (7DAT). The Formulation x Rate interaction showed that the difference was at the highest two rates (800 and 1000 g ai/ha).
- A FAOV showed there was no difference between formulations, across all rates, at 14 and 21DAT.
- A FAOV showed there was no interaction between Formulation X Rate at 14 or 21 DAT.
- A FAOV showed there was no difference between formulation or formulation x rate for sowthistle fresh weight at 21DAT.

Overall conclusion: By 14DAT, both EUR glufosinate 400 and Basta^{™} non-selective herbicide were equivalent for efficacy on sowthistle.

### Materials and Methods (sowthistle)

**Table 33. Formulation ingredients**

| **Chemical Properties** | **EUR Glufosinate** | **Basta Non-selective Herbicide** |
|---|---|---|
| Ingredients | Glufosinate-ammonium | Glufosinate-ammonium |
| Chemical Group | Group N | Group N |
| Formulation type | Soluble concentrate | Soluble concentrate |

| | | |
|---|---|---|
| * Data supplied from MSDS http://www.bayercropscience.com.au/resources/uploads/msds/file7342.pdf | | |

### Soil medium

The soil medium was Debco Premium Potting Mix (Australian Standard AS 3743) (contains NPK and micronutrients) (http://www.debco.com.au/products/all-purpose-potting-mixes/debco-premium-potting-mix).

### Target species

Basta ^{®} Non-selective Herbicide is registered for the control of sowthistle. Also it is a common weed of crops, fallows, gardens, horticulture and disturbed areas across all states of Australia and was therefore selected to be the test species in this study.

**Table 34. Plant species**

| **Common name** | **Family** | **Genus Species** | **Comment** |
|---|---|---|---|
| Common sowthistle | Asteraceae | *Sonchus oleraceus* | Field Collected-Murchison, Vic |

Seeds were kept in a dark, storeroom in sealed containers prior to being sown. None of the seeds received pre-sowing pesticide treatments.

### Sowing (sowthistle)

On the 18^{th} May 2016 (ODAS), three seeds were evenly placed around the soil surface taking care to ensure that seeds were not close to the side of the pot to avoid edge effects.

The herbicide treatments were applied thirty three days after sowing (33DAS).

### Product Treatments (sowthistle)

Eight rates of both EUR Glufosinate (400 g/L glufosinate ammonium see Example 3) and Basta Non-selective Herbicide (200 g/L) were evaluated against an untreated control (UTC) for their effect on vigour and growth of the target plant species. The range extended from 5% to 100% of the proposed label rate.

**Table 35. Treatment list and application rates**

| **No.** | **Treatment** | **Formulation (g ai/L)** | **Rate (g ai/ha)** | **Rate (mL/ha)** |
|---|---|---|---|---|
| 1. | Untreated Control | N/A | N/A | N/A |
| 2. | EUR Glufosinate | 400 | 50 | 125 |
| 3. | EUR Glufosinate | 400 | 100 | 250 |
| 4. | EUR Glufosinate | 400 | 200 | 500 |
| 5. | EUR Glufosinate | 400 | 300 | 750 |
| 6. | EUR Glufosinate | 400 | 400 | 1000 |
| 7. | EUR Glufosinate | 400 | 600 | 1500 |
| 8. | EUR Glufosinate | 400 | 800 | 2000 |
| 9. | EUR Glufosinate | 400 | 1000 | 2500 |
| 10. | Basta Non-selective Herbicide | 200 | 50 | 250 |
| 11. | Basta Non-selective Herbicide | 200 | 100 | 500 |
| 12. | Basta Non-selective Herbicide | 200 | 200 | 1000 |
| 13. | Basta Non-selective Herbicide | 200 | 300 | 1500 |
| 14. | Basta Non-selective Herbicide | 200 | 400 | 2000 |
| 15. | Basta Non-selective Herbicide | 200 | 600 | 3000 |
| 16. | Basta Non-selective Herbicide | 200 | 800 | 4000 |
| 17. | Basta Non-selective Herbicide | 200 | 1000 | 5000 |

The label rate for Basta Non-selective Herbicide is 5000 mL/ha (1000 g ai/ha).

### Herbicide Application Regimes

The herbicide treatments were applied at the rosette stage (33DAS).

**Table 36. Application timing and plant growth stage.**

| **Target species** | **Sowing date** | **Treatment date** | **Treatment timing** | **Growth stage at application** |
|---|---|---|---|---|
| | **(0DAS)** | **(0DAT)** | **(DAS)** | |
| Sowthistle | 18/05/2016 | 20/06/2016 | 33 | Rosette (15-20 cm diameter) |

| | | | | |
|---|---|---|---|---|
| DAS = Days after sowing, DAT = Days after treatment | | | | |

All herbicide treatments were applied using an indoor, enclosed, three nozzle track sprayer purpose designed to allow agricultural chemicals to be applied under Australian conditions.

The Basta Non-selective Herbicide label recommends an application volume of 300-500 L/ha, and the use of hollow cone nozzles for an adequate broadcast application.

The track sprayer was fitted with a 50 mesh in-line filter and 100 mesh nozzle filters. The Teejet^{®} Extended Range Flat Spray Tips XR11006 (110°) nozzles were spaced at 50 cm and set at 50 cm above the soil in the pots as recommended by the manufacturers to ensure double overlap of the spray (http://www.teejet.com/english/home/tech-support/nozzle-technical-information/nozzle-spacing-and-minimum-spray-heights.aspx .

The spray pressure was 2 bar (200kPa). The boom moved at a constant 6 kph along the track delivering 388 L/ha.

**Table 37. Herbicide application equipment and settings**

| **Application equipment** | **Settings** | **Basta Non-selective Herbicide label recommendations*** |
|---|---|---|
| Spray nozzles | T Jet XR11006 110° **flat spray** nozzles | Flat spray or cone nozzles |
| Spray pressure | 2 bar | Not provided |
| Application volume | 388 L/ha | 300-500 L/ha |
| Boom height | 50 cm | Not provided |
| Application speed | 6 km/hr | Not provided |

| | | |
|---|---|---|
| *Basta^{®} Non-selective Herbicide label (http://bayercropscience.com.au/resources/uploads/label/file10165.pdf?20168193718 9 | | |

### Growth Conditions (sowthistle)

The seedlings were germinated outdoors where they experienced ambient conditions similar to those in the field. The plants remained outdoors until spraying.

After treatment all pots were returned to the greenhouse. The greenhouse temperature was maintained at 24±2°C. Plants were watered daily/as needed, with a handheld sprinkler with a shower fitting, to field capacity.

### Vigour and growth assessments

The sowthistle was assessed for visual phytotoxicity at 7, 14 and 21DAT. This equated to 40, 47 and 54DAS.

The average fresh weight per sowthistle seedling was measured at 21DAT (54DAS).

### Replication

There were eight replicates of each treatment.

### Statistical Analysis

The software package used for statistical analyses was ARM ^{©}2015 Gylling Data Management. Factorial analysis of variance tests were calculated to evaluate whether formulation differences existed (P ≤0.05). Fischer's Least Significant Difference (LSD) test, at a 5% level of accepted error, was used to determine between treatment differences.

### Results and Discussion (Sowthistle)

All treatments were evaluated for phytotoxicity/percentage reduction in biomass at 7, 14 and 21DAT (40, 47 and 54DAS).

Factorial analysis of variance by formulation type, averaged across all rates, for phytotoxicity at 7, 14 and 21DAT

**Table 38. (sowthistle)**

| **Product** | **Phytotoxicity (Visual reduction in biomass %)** | | | | | |
|---|---|---|---|---|---|---|
| | **7DAT** | | **14DAT** | | **21DAT** | |
| EUR Glufosinate | 33.2 | b | 50.7 | a | 66.0 | a |
| Basta Non-selective Herbicide | 36.6 | a | 51.6 | a | 66.9 | a |
| P-Value | 0.0165 | | 0.5177 | | 0.5563 | |
| LSD (5% error) | 2.7 | | N/A | | N/A | |
| DAT = Days after treatment | 22 | | 16 | | 14 | |
| CV | | | | | | |

| | | | | | | |
|---|---|---|---|---|---|---|
| CV = Coefficient of variance N/A = not applicable as p>0.05 Treatment means in columns with the same letter are no significantly different at a 5% level of accepted error. | | | | | | |

**Table 39. Factorial analysis of variance for an interaction between Formulation and Rate, for phytotoxicity at 7, 14 and 21DAT (sowthistle).**

| **Product** | **Rate (g ai/ha)** | **Phytotoxicity (Visual reduction in biomass %)** | | | | | |
|---|---|---|---|---|---|---|---|
| | | **7DAT** | | **14DAT** | | **21DAT** | |
| Untreated Control | Nil | 0.0 | | 0.0 | | 0.0 | |
| EUR Glufosinate | 50 | 1.3 | i | 3.8 | a | 8.8 | a |
| EUR Glufosinate | 100 | 7.5 | hi | 15.0 | a | 25.0 | a |
| EUR Glufosinate | 200 | 20.6 | f | 35.0 | a | 47.5 | a |
| EUR Glufosinate | 300 | 25.0 | ef | 40.6 | a | 66.9 | a |
| EUR Glufosinate | 400 | 32.5 | e | 45.0 | a | 81.3 | a |
| EUR Glufosinate | 600 | 46.3 | d | 75.0 | a | 98.4 | a |
| EUR Glufosinate | 800 | 62.5 | c | 91.9 | a | 100.0 | a |
| EUR Glufosinate | 1000 | 70.0 | bc | 99.4 | a | 100.0 | a |
| Basta Non-selective Herbicide | 50 | 1.9 | i | 4.4 | a | 10.0 | a |
| Basta Non-selective Herbicide | 100 | 11.9 | gh | 23.1 | a | 36.9 | a |
| Basta Non-selective Herbicide | 200 | 18.8 | fg | 30.6 | a | 49.4 | a |
| Basta Non-selective Herbicide | 300 | 26.3 | ef | 46.3 | a | 66.9 | a |
| Basta Non-selective Herbicide | 400 | 26.9 | ef | 45.0 | a | 75.6 | a |
| Basta Non-selective Herbicide | 600 | 48.1 | d | 66.9 | a | 96.8 | a |
| Basta Non-selective Herbicide | 800 | 73.8 | b | 96.9 | a | 100.0 | a |
| Basta Non-selective Herbicide | 1000 | 85.0 | a | 100.0 | a | 100.0 | a |
| P-Value | | 0.0063 | | 0.1109 | | 0.3405 | |
| LSD (5% error) | | 7.7 | | N/A | | N/A | |
| CV | | 22 | | 16 | | 14 | |

| | | | | | | | |
|---|---|---|---|---|---|---|---|
| DAT = Days after treatment, CV = Coefficient of variance, N/A = not applicable as p>0.05 Treatment means in columns with the same letter are no significantly different at a 5% level of accepted error. | | | | | | | |

### 7DAT Visual phytotoxicity assessment (sowthistle)

At 7DAT, averaged across all rates, Basta Non-selective Herbicide was more efficacious than EUR Glufosinate based on percentage of phytotoxicity on sowthistle. Similarly, there was a significant interaction between Formulation and Rate, for phytotoxicity on sowthistle; equivalent rates of each formulation had resulted in similar phytotoxicity, except at the highest two rates (800 and 1000 g ai/ha) where sowthistle treated with Basta Non-selective Herbicide had more phytotoxicity present.

There was no phytotoxicity present on sowthistle in the untreated control.

### 14DAT Visual phytotoxicity assessment (sowthistle)

At 14DAT, averaged across all rates, there was no formulation difference for phytotoxicity on sowthistle (means 50.7-51.6 % biomass reduction). The mean phytotoxicity of each formulation, across all rates, had increased since the 7DAT assessment.

There was no significant Formulation x Rate interaction, for phytotoxicity on sowthistle (P 0.1109).

There was no phytotoxicity present on sowthistle in the untreated control.

### 21DAT Visual phytotoxicity assessment (sowthistle)

At 21DAT, averaged across all rates there was no formulation difference for phytotoxicity on sowthistle (means 66.0-66.9 % biomass reduction). The mean phytotoxicity of each formulation had increased since the 14DAT assessment.

There was no significant Formulation x Rate interaction for phytotoxicity on sowthistle.

There was no phytotoxicity present on sowthistle in the untreated control.

**Table 40. Factorial analysis of variance by formulation type, across all rates, for plant fresh weight at 21DAT (sowthistle)**

| **Product** | **Fresh weight (mean g)** | |
|---|---|---|
| | **21DAT** | |
| EUR Glufosinate | 10.64 | a |
| Basta Non-selective Herbicide | 10.66 | a |
| P-Value | 0.9494 | |
| LSD (5% error) | N/A | |
| CV | 18 | |

| | | |
|---|---|---|
| DAT = Days after treatment CV = Coefficient of variance N/A = not applicable as p>0.05 Treatment means in columns with the same letter are no significantly different at a 5% level of accepted error. | | |

**Table 41. Factorial analysis of variance by formulation x rate, for plant fresh weight at 21DAT (sowthistle).**

| **Product** | **Rate (g ai/ha)** | **Fresh weight (mean g)** |
|---|---|---|
| | | **21DAT** |
| Untreated Control | Nil | 20.14 |
| EUR Glufosinate | 50 | 18.91 |
| EUR Glufosinate | 100 | 16.88 |
| EUR Glufosinate | 200 | 11.71 |
| EUR Glufosinate | 300 | 11.93 |
| EUR Glufosinate | 400 | 8.58 |
| EUR Glufosinate | 600 | 7.19 |
| EUR Glufosinate | 800 | 4.96 |
| EUR Glufosinate | 1000 | 4.94 |
| Basta Non-selective Herbicide | 50 | 20.04 |
| Basta Non-selective Herbicide | 100 | 15.29 |
| Basta Non-selective Herbicide | 200 | 12.58 |
| Basta Non-selective Herbicide | 300 | 10.16 |
| Basta Non-selective Herbicide | 400 | 9.75 |
| Basta Non-selective Herbicide | 600 | 6.44 |
| Basta Non-selective Herbicide | 800 | 5.52 |
| Basta Non-selective Herbicide | 1000 | 5.51 |
| P-Value | | 0.1383 |
| LSD (5% error) | | N/A |
| CV | | 18 |

| | | |
|---|---|---|
| DAT = Days after treatment, CV = Coefficient of variance, N/A = not applicable as p>0.05, Treatment means in columns with the same letter are no significantly different at a 5% level of accepted error. | | |

### 21DAT Plant Fresh Weight (sowthistle)

The mean fresh weight of sowthistle in the untreated control was 20.14 g.

There was no formulation difference, across all rates, for fresh weight of sowthistle (means 10.64-10.66 g).

There was no significant formulation x rate difference, for fresh weight of sowthistle.

### Conclusion (sowthistle)

The aim of this study was to compare the Formulation and Formulation x Rate interaction of Basta^{®} Non-selective Herbicide and EUR Glufosinate, when foliar applied, at a range of rates up to and including the Basta label rate, on the vegetative vigour and biomass of sowthistle.

A factorial analysis of variance (FAOV) showed that Basta Non-selective Herbicide was more efficacious than EUR Glufosinate on sowthistle at 7 days after treatment (7DAT). The Formulation x Rate interaction showed that the difference was at the highest two rates (800 and 1000 g ai/ha).

A FAOV showed there was no difference between formulations, across all rates, at 14 and 21DAT.

A FAOV showed there was no difference between Formulation x Rate at 14 or 21DAT.

A FAOV showed there was no difference between Formulation or Formulation x Rate for sowthistle fresh weight at 21DAT.

Overall conclusion: By 14DAT, both EUR Glufosinate and Basta Non-selective herbicide were equivalent for efficacy on sowthistle.

### Efficacy Example: Volunteer Wheat

Basta^{™} Non-selective Herbicide (200 g/L glufosinate-ammonium) is a Group N herbicide soluble concentrate for non-residual control of broadleaf and grass weeds.

EUR glufosinate 400 (400 g/L glufosinate-ammonium see Example 3) was compared with Basta^{™} Non-selective Herbicide in a study for effect on the vegetative vigour and growth of volunteer wheat.

The aim of this study was to compare the Formulation and Formulation X Rate effect of the two products on the vegetative vigour and biomass of key test species at a range of rates up to and including the label rate.
- Eight herbicide rates and eight replicates were used for each treatment,
   - Data was presented for four parameters; visual phytotoxicity at 7, 14 and 21DAT and plant fresh weight at 21 DAT,
   - Data was presented for four parameters; visual phytotoxicity at 7, 14 and 21DAT, and plant fresh weight at 21DAT,
   - Experiments on glufosinate efficacy are notoriously variable but in this trial the variability was comparatively low with the Coefficient of Variance mainly being between 12 and 20%,
   - All data was analysed using a factorial analysis of variance (FAOV),
   - A FAOV showed there was no difference between the efficacy of the formulations at 7 and 14DAT.

The conclusions from this study were;
- At 21DAT, averaged across all rates, EUR glufosinate 400 was more efficacious at reducing wheat biomass than Basta^{™} Non-selective Herbicide,
- A FAOV showed there was no interaction between Formulation and Rate at 7, 14DAT, or 21DAT,
- A FAOV showed there was no difference between Formulation or Formulation X Rate for wheat fresh weight at 21 DAT.

In conclusion, in this study, Basta^{™} Non-selective Herbicide ad EUR glufosinate 400 were bioequivalent for the control of volunteer wheat.

### Materials and Methods (volunteer wheat)

### Test substances

**Table 42. Formulation ingredients**

| **Chemical Properties** | **EUR Glufosinate (example 3)** | **Basta Non-selective Herbicide** |
|---|---|---|
| Ingredients | Glufosinate-ammonium | Glufosinate-ammonium |
| Chemical Group | Group N | Group N |
| Formulation type | Soluble concentrate | Soluble concentrate |

| | | |
|---|---|---|
| *Data supplied from MSDS http://www.bayercropscience.com.au/resources/uploads/msds/file7342.pdf | | |

### Soil medium

The soil medium was Debco Premium Potting Mix (Australian Standard AS 3743) (contains NPK and micronutrients) (http://www.debco.com.au/products/all-purpose-potting-mixes/debco-premium-potting-mix).

### Target species (volunteer wheat)

Basta ^{®} Non-selective Herbicide is registered for the control of volunteer wheat and was therefore selected to be the test species in this study.

**Table 43. Plant species**

| **Common name** | **Family** | **Genus Species** | **Cultivar** |
|---|---|---|---|
| Wheat (volunteer) | Poaceae | *Triticum Aestivum* | Gregory |

Seeds were kept in a dark, storeroom in sealed containers prior to being sown.

### Sowing

Pots were sown with wheat on the 18^{th} May 2016 (0DAS).

The herbicide treatments were applied thirty three days after sowing (33DAS).

### Product Treatments (volunteer wheat)

Eight rates of both EUR Glufosinate (400 g/L glufosinate ammonium) and Basta Non-selective Herbicide were evaluated against an untreated control (UTC) for their effect on vigour and growth of the target plant species. The range extended from 5% to 100% of the proposed label rate.

**Table 44. Treatment list and application rates**

| **No.** | **Treatment** | **Formulation (g ai/L)** | **Rate (g ai/ha)** | **Rate (mL/ha)** |
|---|---|---|---|---|
| 1. | Untreated Control | N/A | N/A | N/A |
| 2. | EUR Glufosinate | 400 | 50 | 125 |
| 3. | EUR Glufosinate | 400 | 100 | 250 |
| 4. | EUR Glufosinate | 400 | 200 | 500 |
| 5. | EUR Glufosinate | 400 | 300 | 750 |
| 6. | EUR Glufosinate | 400 | 400 | 1000 |
| 7. | EUR Glufosinate | 400 | 600 | 1500 |
| 8. | EUR Glufosinate | 400 | 800 | 2000 |
| 9. | EUR Glufosinate | 400 | 1000 | 2500 |
| 10. | Basta Non-selective Herbicide | 200 | 50 | 250 |
| 11. | Basta Non-selective Herbicide | 200 | 100 | 500 |
| 12. | Basta Non-selective Herbicide | 200 | 200 | 1000 |
| 13. | Basta Non-selective Herbicide | 200 | 300 | 1500 |
| 14. | Basta Non-selective Herbicide | 200 | 400 | 2000 |
| 15. | Basta Non-selective Herbicide | 200 | 600 | 3000 |
| 16. | Basta Non-selective Herbicide | 200 | 800 | 4000 |
| 17. | Basta Non-selective Herbicide | 200 | 1000 | 5000 |

The label rate for Basta Non-selective Herbicide is 5000 mL/ha (1000 g ai/ha).

### Herbicide Application Regimes

The herbicide treatments were applied at late tillering (21DAS).

**Table 45. Application timing and plant growth stage.**

| **Crop species** | **Sowing date** | **Treatment date** | **Treatment timing** | **Growth stage at application** |
|---|---|---|---|---|
| | **(0DAS)** | **(0DAT)** | **(DAS)** | |
| Wheat (volunteer) | 18/05/2016 | 20/06/2016 | 33 | Late tillering (G.S. 24-28) |

| | | | | |
|---|---|---|---|---|
| DAS = Days after sowing, DAT = Days after treatment | | | | |

All herbicide treatments were applied using an indoor, enclosed, three nozzle track sprayer purpose designed to allow agricultural chemicals to be applied under Australian conditions.

The Basta Non-selective Herbicide label recommends an application volume of 300-500 L/ha, and the use of hollow cone nozzles for an adequate broadcast application.

The track sprayer was fitted with a 50 mesh in-line filter and 100 mesh nozzle filters. The Teejet^{®} Extended Range Flat Spray Tips XR11006 (110°) nozzles were spaced at 50 cm and set at 50 cm above the soil in the pots as recommended by the manufacturers to ensure double overlap of the spray (http://www.teejet.com/english/home/tech-support/nozzle-technical-information/nozzle-spacing-and-minimum-spray-heights.aspx .

The spray pressure was 2 bar (200kPa). The boom moved at a constant 6 kph along the track delivering 388 L/ha.

**Table 46. Herbicide application equipment and settings**

| **Application equipment** | **Settings** | **Basta Non-selective Herbicide label recommendations*** |
|---|---|---|
| Spray nozzles | T Jet XR11006 110° **flat spray** nozzles | Flat spray or cone nozzles |
| Spray pressure | 2 bar | Not provided |
| Application volume | 388 L/ha | 300-500 L/ha |
| Boom height | 50 cm | Not provided |
| Application speed | 6 km/hr | Not provided |

| | | |
|---|---|---|
| *Basta^{®} Non-selective Herbicide label (http://bayercropscience.com.au/resources/uploads/label/file10165.pdf?20168193718 9 | | |

### Growth Conditions (wheat)

Seeds were germinated in a temperature-controlled greenhouse where the temperature was maintained at 24±2°C for seven days before being moved outdoors. The plants experienced ambient conditions similar to those in the field. Plants were watered every second day, with a handheld sprinkler with a shower fitting, to field capacity.

### Vigour and growth assessments

The wheat was assessed for visual phytoxicity at 7, 14 and 21DAT. This equated to 40, 47 and 54DAS.

The average fresh weight per wheat seedling was measured at 21DAT (54DAS).

### Replication

There were eight replicates of each treatment.

### Statistical Analysis

The software package used for statistical analyses was ARM ^{©}2015 Gylling Data Management. Factorial analysis of variance tests were calculated to evaluate whether formulation differences existed (P ≤0.05). Fischer's Least Significant Difference (LSD) test, at a 5% level of accepted error, was used to determine between treatment differences.

### Results and Discussion - Wheat (volunteer)

All treatments were evaluated for phytotoxicity/percentage reduction in biomass at 7, 14 and 21DAT (40, 47 and 54DAS).

**Table 47. Factorial analysis of variance by formulation type, averaged across all rates, for phytotoxicity at 7, 14 and 21DAT (volunteer wheat).**

| **Product** | **Phytotoxicity (Mean visual reduction in biomass %)** | | | | | |
|---|---|---|---|---|---|---|
| | **7DAT** | | **14DAT** | | **21DAT** | |
| EUR Glufosinate | 25.7 | a | 38.6 | a | 47.5 | a |
| Basta Non-selective Herbicide | 26.3 | a | 38.6 | a | 43.9 | b |
| P-Value | 0.6461 | | 1.0000 | | 0.0121 | |
| LSD (5% error) | N/A | | N/A | | 2.8 | |
| CV | 30 | | 20 | | 17 | |

| | | | | | | |
|---|---|---|---|---|---|---|
| DAT = Days after treatment CV = Coefficient of variance N/A = not applicable as p>0.05 Treatment means in columns with the same letter are no significantly different at a 5% level of accepted error. | | | | | | |

**Table 48. Factorial analysis of variance by an interaction between Formulation and Rate, for phytotoxicity at 7, 14 and 21DAT (volunteer wheat)**

| **Product** | **Rate (g ai/ha)** | **Phytotoxicity (Mean visual reduction in biomass %)** | | | | | |
|---|---|---|---|---|---|---|---|
| | | **7DAT** | | **14DAT** | | **21DAT** | |
| Untreated Control | Nil | 0.0 | | 0.0 | | 0.0 | |
| EUR Glufosinate | 50 | 0.0 | a | 0.0 | a | 0.0 | a |
| EUR Glufosinate | 100 | 2.5 | a | 6.3 | a | 9.4 | a |
| EUR Glufosinate | 200 | 5.6 | a | 10.0 | a | 18.1 | a |
| EUR Glufosinate | 300 | 12.5 | a | 18.8 | a | 25.0 | a |
| EUR Glufosinate | 400 | 23.1 | a | 38.8 | a | 52.5 | a |
| EUR Glufosinate | 600 | 35.0 | a | 53.8 | a | 79.4 | a |
| EUR Glufosinate | 800 | 60.6 | a | 81.9 | a | 96.3 | a |
| EUR Glufosinate | 1000 | 66.3 | a | 99.4 | a | 99.4 | a |
| Basta Non-selective Herbicide | 50 | 0.0 | a | 0.0 | a | 0.0 | a |
| Basta Non-selective Herbicide | 100 | 1.3 | a | 0.6 | a | 0.6 | a |
| Basta Non-selective Herbicide | 200 | 6.9 | a | 10.6 | a | 12.5 | a |
| Basta Non-selective Herbicide | 300 | 10.6 | a | 15.6 | a | 24.4 | a |
| Basta Non-selective Herbicide | 400 | 26.3 | a | 35.6 | a | 40.0 | a |
| Basta Non-selective Herbicide | 600 | 35.6 | a | 61.3 | a | 76.9 | a |
| Basta Non-selective Herbicide | 800 | 61.9 | a | 85.0 | a | 97.1 | a |
| Basta Non-selective Herbicide | 1000 | 68.1 | a | 100.0 | a | 100.0 | a |
| P-Value | | 0.9886 | | 0.3740 | | 0.1535 | |
| LSD (5% error) | | N/A | | N/A | | N/A | |
| CV | | 30 | | 20 | | 17 | |

| | | | | | | | |
|---|---|---|---|---|---|---|---|
| DAT = Days after treatment, CV = Coefficient of variance, N/A = not applicable as p>0.05. Treatment means in columns with the same letter are no significantly different at a 5% level of accepted error. | | | | | | | |

### 7DAT Visual phytotoxicity assessment (volunteer wheat)

At 7DAT, averaged across all application rates there was no difference in efficacy between the formulations (means 25.7 -26.3 % biomass reduction)

There was no significant Formulation x Rate interaction, for phytotoxicity on wheat.

There was no phytotoxicity present on wheat in the untreated control.

### 14DAT Visual phytotoxicity assessment (volunteer wheat)

At 14DAT, averaged across all rates, there was no difference in formulations for phytotoxicity on wheat (mean 38.6% biomass reduction). The mean phytotoxicity of each formulation, across all rates, had increased since the 7DAT assessment.

There was no significant interaction between Formulation x Rate for phytotoxicity on wheat.

There was no phytotoxicity present on wheat in the untreated control.

### 21 DAT Visual phytotoxicity assessment (volunteer wheat)

At 21DAT, averaged across all rates, there was a significant formulation difference for phytotoxicity on wheat; the mean percentage biomass reduction for plants treated with EUR Glufosinate was 47.5%, which was significantly more than plants treated with Basta non-selective herbicide, 43.9%.

There was no significant Formulation x Rate interaction for phytotoxicity on wheat.

There was no phytotoxicity present on wheat in the untreated control.

**Table 49. Factorial analysis of variance by formulation type, across all rates, for plant fresh weight at 21DAT (volunteer wheat)**

| **Product** | **Fresh weight (mean g)** | |
|---|---|---|
| | **21DAT** | |
| EUR Glufosinate | 11.74 | a |
| Basta Non-selective Herbicide | 11.93 | a |
| P-Value | 0.4737 | |
| LSD (5% error) | N/A | |
| CV | 12 | |

**Table 50. Factorial analysis of variance by formulation x rate, for plant fresh weight at 21DAT (volunteer wheat)**

| **Product** | **Rate (g ai/ha)** | **Fresh weight (mean g)** | |
|---|---|---|---|
| | | **21DAT** | |
| Untreated Control | Nil | 16.90 | |
| EUR Glufosinate | 50 | 16.60 | a |
| EUR Glufosinate | 100 | 16.40 | a |
| EUR Glufosinate | 200 | 15.91 | a |
| EUR Glufosinate | 300 | 14.30 | a |
| EUR Glufosinate | 400 | 14.58 | a |
| EUR Glufosinate | 600 | 7.61 | a |
| EUR Glufosinate | 800 | 4.77 | a |
| EUR Glufosinate | 1000 | 3.77 | a |
| Basta Non-selective Herbicide | 50 | 16.79 | a |
| Basta Non-selective Herbicide | 100 | 16.70 | a |
| Basta Non-selective Herbicide | 200 | 15.73 | a |
| Basta Non-selective Herbicide | 300 | 14.43 | a |
| Basta Non-selective Herbicide | 400 | 13.19 | a |
| Basta Non-selective Herbicide | 600 | 8.35 | a |
| Basta Non-selective Herbicide | 800 | 5.73 | a |
| Basta Non-selective Herbicide | 1000 | 4.50 | a |
| P-Value | | 0.3979 | |
| LSD (5% error) | | N/A | |
| CV | | 12 | |

| | | | |
|---|---|---|---|
| DAT = Days after treatment, CV = Coefficient of variance, N/A = not applicable as p>0.05, Treatment means in columns with the same letter are no significantly different at a 5% level of accepted error. | | | |

### 21DAT Fresh Weight (volunteer wheat)

The mean fresh weight of wheat in the untreated control was 16.90 g.

Averaged across all rates, there was no formulation difference for fresh weight of wheat (means 11.74-11.93 g).

There was no significant Formulation x Rate interaction, for fresh weight of wheat.

### Conclusion (volunteer wheat)

The aim of this study was to compare the Formulation and Formulation x Rate effect of Basta^{®} Non-selective Herbicide and EUR Glufosinate, when foliar applied, at a range of rates up to and including the Basta label rate, on the vegetative vigour and biomass of wheat (volunteer).

A factorial analysis of variance (FAOV) showed there was no difference between formulation, across all rates, at 7 and 14DAT.

At 21DAT, across all rates, EUR Glufosinate was more efficacious at reducing wheat biomass than Basta Non-selective Herbicide.

A FAOV showed there was no difference between formulation x rate at 7, 14DAT, or 21DAT.

A FAOV showed there was no difference between formulation or formulation x rate for wheat fresh weight at 21DAT.

The two products were bioequivalent for the control of volunteer wheat.

### Efficacy Example: Wild radish

Basta^{™} Non-selective Herbicide (200 g/L glufosinate-ammonium) is a Group N herbicide for non-residual control of broadleaf and grass weeds.

EUR glufosinate 400 (400 g/L glufosinate-ammonium see Example 3) was compared with Basta^{™} Non-Selective Herbicide in a study for effect on the vegetative vigour and growth of wild radish. Wild radish was chosen as Basta^{™} Non selective Herbicide is registered for its control, it is a weed that is difficult to control and is a widely spread annual weed in Australia.

The aim of this study was to compare the Formulation and Formulation X Rate effect of Basta^{™} Non-selective Herbicide and EUR glufosinate 400, when foliar applied, at a range of rates up to and including the Basta^{™} Non-selective Herbicide label rate, on the vegetative vigour and biomass of wild radish.
- Eight herbicide rates and eight replicates were used for each treatment,
- Data was presented for four parameters; visual phytotoxicity at 7, 14 and 21DAT and plant fresh weight at 21DAT;
- All data was analysed using a factorial analysis of variance (FAOV)
- Experiments on glufosinate-ammonium efficacy are notoriously variable but in this trial the variability was comparatively low with the Coefficient of Variance being between 16 and 25%.

The conclusions from this study (wild radish) were;
- A factorial analysis of variance (FAOV) showed there was no difference between the efficacy of the formulations when averaged across all rates, at 7, 14 and 21DAT.
- A FAOV showed there was no interaction between Formulation and Rate at 7, or 14DAT.
- At 21DAT, the Formulation x Rate was equivalent for rates 30-100% of the label rate and Basta^{™} Non-selective Herbicide was less efficacious on wild radish at lower rates.
- A FAOV showed there was no difference between Formulation or Formulation X Rate for wild radish fresh weight at 21 DAT.

In conclusion, in this study Basta^{™} Non-selective Herbicide and EUR glufosinate 400 were bioequivalent for the control of wild radish.

### Materials and Methods (wild radish)

### Test substances

**Table 51. Formulation ingredients**

| **Chemical Properties** | **EUR Glufosinate (example 3)** | **Basta Non-selective Herbicide** |
|---|---|---|
| Ingredients | Glufosinate-ammonium | Glufosinate-ammonium |
| Chemical Group | Group N | Group N |
| Formulation type | Soluble concentrate | Soluble Concentrate |

| | | |
|---|---|---|
| *Data supplied from MSDS http://www.bayercropscience.com.au/resources/uploads/msds/file7342.pdf | | |

### Soil medium

The soil medium was Debco Premium Potting Mix (Australian Standard AS 3743) (contains NPK and micronutrients) (http://www.debco.com.au/products/all-purpose-potting-mixes/debco-premium-potting-mix).

### Target species

Basta ^{®} Non-selective Herbicide is registered for the control of wild radish. Also, it is the third most wide spread and serious weed in broadacre cropping in Australia (HerbiGuide 'Wild Radish').

**Table 52. Plant species**

| **Common name** | **Family** | **Genus Species** | **Comment** |
|---|---|---|---|
| Wild Radish | Brassicaceae | *Raphanus raphanistrum* | Field Collected-Murraydale, Vic |

Seeds were kept in a dark, storeroom in sealed containers prior to being sown. None of the seeds received pre-sowing pesticide treatments.

### Sowing (wild radish)

On the 18^{th} May 2016 (0DAS), three seeds were evenly placed around the soil surface taking care to ensure that seeds were not close to the side of the pot to avoid edge effects. Seeds were covered by 2-3 mm of washed river sand.

The herbicide treatments were applied thirty three days after sowing (33DAS).

### Product Treatments (wild radish)

Eight rates of both EUR Glufosinate (400 g/L glufosinate ammonium - see Example 3) and Basta^{®} Non- selective Herbicide were evaluated against an untreated control (UTC) for their effect on vigour and growth of the target plant species. The range extended from 5% to 100% of the proposed label rate.

**Table 53. Treatment list and application rates**

| **No.** | **Treatment** | **Formulation (g ai/L)** | **Rate (g ai/ha)** | **Rate (mL/ha)** |
|---|---|---|---|---|
| 1. | Untreated Control | N/A | N/A | N/A |
| 2. | EUR Glufosinate | 400 | 50 | 125 |
| 3. | EUR Glufosinate | 400 | 100 | 250 |
| 4. | EUR Glufosinate | 400 | 200 | 500 |
| 5. | EUR Glufosinate | 400 | 300 | 750 |
| 6. | EUR Glufosinate | 400 | 400 | 1000 |
| 7. | EUR Glufosinate | 400 | 600 | 1500 |
| 8. | EUR Glufosinate | 400 | 800 | 2000 |
| 9. | EUR Glufosinate | 400 | 1000 | 2500 |
| 10. | Basta Non-selective Herbicide | 200 | 50 | 250 |
| 11. | Basta Non-selective Herbicide | 200 | 100 | 500 |
| 12. | Basta Non-selective Herbicide | 200 | 200 | 1000 |
| 13. | Basta Non-selective Herbicide | 200 | 300 | 1500 |
| 14. | Basta Non-selective Herbicide | 200 | 400 | 2000 |
| 15. | Basta Non-selective Herbicide | 200 | 600 | 3000 |
| 16. | Basta Non-selective Herbicide | 200 | 800 | 4000 |
| 17. | Basta Non-selective Herbicide * | 200 | 1000 | 5000 |

| | | | | |
|---|---|---|---|---|
| *The label rate for Basta Non-selective Herbicide is 5000 mL/ha (1000 g ai/ha). | | | | |

### Herbicide Application Regimes

The herbicide treatments were applied at the rosette stage (21DAS).

**Table 54. Application timing and plant growth stage.**

| **Sowing date (0DAS)** | **Treatment date (0DAT)** | **Treatment timing (DAS)** | **Growth stage at application** |
|---|---|---|---|
| 18/05/2016 | 20/06/2016 | 33 | Rosette (18 -22 cm diameter) |

| | | | |
|---|---|---|---|
| DAS = Days after sowing, DAT = Days after treatment | | | |

All herbicide treatments were applied using an indoor, enclosed, three nozzle track sprayer purpose designed to allow agricultural chemicals to be applied under Australian conditions.

The Basta Non-selective Herbicide label recommends an application volume of 300-500 L/ha, and the use of hollow cone nozzles for an adequate broadcast application.

The track sprayer was fitted with a 50 mesh in-line filter and 100 mesh nozzle filters. The Teejet^{®} Extended Range Flat Spray Tips XR11006 (110°) nozzles were spaced at 50 cm and set at 50 cm above the soil in the pots as recommended by the manufacturers to ensure double overlap of the spray (http://www.teejet.com/english/home/tech-support/nozzle-technical-information/nozzle-spacing-and-minimum-spray-heights.aspx .

The spray pressure was 2 bar (200kPa). The boom moved at a constant 6 kph along the track delivering 388 L/ha.

**Table 55. Herbicide application equipment and settings**

| **Application equipment** | **Settings** | **Basta Non-selective Herbicide label recommendations*** |
|---|---|---|
| Spray nozzles | T Jet XR11006 110° **flat spray** nozzles | Flat spray or cone nozzles |
| Spray pressure | 2 bar | Not provided |
| Application volume | 388 L/ha | 300-500 L/ha |
| Boom height | 50 cm | Not provided |
| Application speed | 6 km/hr | Not provided |

| | | |
|---|---|---|
| *Basta^{®} Non-selective Herbicide label (http://bayercropscience.com.au/resources/uploads/label/file10165.pdf?20168193718 9 | | |

### Growth Conditions (wild radish)

The plants experienced ambient conditions similar to those in the field. Plants were watered every second day, with a handheld sprinkler with a shower fitting, to field capacity.

### Vigour and growth assessments

The wild radish was assessed for visual phytotoxicity/reduction in biomass at 7, 14 and 21DAT. This equated to 40, 47 and 54DAS.

The average fresh weight per wild radish seedling was measured at 21DAT (54DAS).

### Replication

There were eight replicates of each treatment.

### Statistical Analysis

The software package used for statistical analyses was ARM ^{©}2015 Gylling Data Management. Factorial analysis of variance tests were calculated to evaluate whether formulation differences existed (P ≤0.05). Fischer's Least Significant Difference (LSD) test, at a 5% level of accepted error, was used to determine between treatment differences.

### Results and Discussion - Wild Radish

All treatments were evaluated for phytotoxicity/percentage reduction in biomass at 7, 14 and 21DAT (40, 47 and 54DAS).

**Table 52. Factorial analysis of variance by formulation type, averaged across all rates, for phytotoxicity at 7, 14 and 21DAT (wild radish).**

| **Product** | **Phytotoxicity (mean visual reduction in biomass %)** | | |
|---|---|---|---|
| | **7DAT** | **14DAT** | **21DAT** |
| EUR Glufosinate | 30.9 a | 45.1 a | 51.4 a |
| Basta Non-selective Herbicide | 29.2 a | 46.4 a | 51.2 a |
| P-Value | 0.1913 | 0.4822 | 0.8330 |
| LSD (5% error) | N/A | N/A | N/A |
| CV | 25 | 21 | 15 |

| | | | |
|---|---|---|---|
| DAT = Days after treatment, CV = Coefficient of variance, N/A = not applicable as p>0.05, Treatment means in columns with the same letter are no significantly different at a 5% level of accepted error. | | | |

**Table 57. Factorial analysis of variance for an interaction between Formulation and Rate, for phytotoxicity at 7, 14 and 21DAT (wild radish).**

| **Product** | **Rate (g ai/ha)** | **Phytotoxicity (Visual reduction in biomass %)** | | |
|---|---|---|---|---|
| | | **7DAT** | **14DAT** | **21DAT** |
| Untreated Control | Nil | 0.0 | 0.0 | 0.0 |
| EUR Glufosinate | 50 | 1.9 a | 1.3 a | 0.0 h |
| EUR Glufosinate | 100 | 9.4 a | 12.5 a | 10.0 g |
| EUR Glufosinate | 200 | 16.3 a | 25.0 a | 21.9 f |
| EUR Glufosinate | 300 | 16.9 a | 31.3 a | 35.6 e |
| EUR Glufosinate | 400 | 36.9 a | 53.8 a | 68.8 c |
| EUR Glufosinate | 600 | 43.8 a | 64.4 a | 79.4 b |
| EUR Glufosinate | 800 | 57.5 a | 82.5 a | 96.3 a |
| EUR Glufosinate | 1000 | 65.0 a | 90.0 a | 99.4 a |
| Basta Non-selective Herbicide | 50 | 0.0 a | 0.0 a | 0.0 h |
| Basta Non-selective Herbicide | 100 | 5.0 a | 5.0 a | 0.6 h |
| Basta Non-selective Herbicide | 200 | 9.4 a | 20.6 a | 10.6 g |
| Basta Non-selective Herbicide | 300 | 18.8 a | 38.1 a | 53.1 d |
| Basta Non-selective Herbicide | 400 | 32.5 a | 53.1 a | 65.6 c |
| Basta Non-selective Herbicide | 600 | 45.0 a | 70.6 a | 84.4 b |
| Basta Non-selective Herbicide | 800 | 60.6 a | 85.0 a | 95.3 a |
| Basta Non-selective Herbicide | 1000 | 62.5 a | 98.4 a | 100.0 a |
| P-Value | | 0.5059 | 0.1558 | 0.0001 |
| LSD (5% error) | | N/A | N/A | 7.7 |
| CV | | 25 | 21 | 15 |

| | | | | |
|---|---|---|---|---|
| DAT = Days after treatment, CV = Coefficient of variance, N/A = not applicable as p>0.05, Treatment means in columns with the same letter are no significantly different at a 5% level of accepted error. | | | | |

### 7DAT Visual phytotoxicity assessment (wild radish)

At 7DAT, averaged across all application rates there was no difference in efficacy between the formulations (means 29.2-30.9 % biomass reduction).

There was no significant Formulation x Rate interaction, for phytotoxicity on wild radish.

There was no phytotoxicity present on wild radish in the untreated control.

### 14DAT Visual phytotoxicity assessment (wild radish)

At 14DAT, averaged across all rates, there was no different in efficacy between the formulations for phytotoxicity on wild radish (means 45.1-46.4 % biomass reduction). The mean phytotoxicity of each formulation, had increased since the 7DAT assessment.

There was no significant Formulation x Rate interaction for phytotoxicity on wild radish.

There was no phytotoxicity present on wild radish in the untreated control.

### 21DAT Visual phytotoxicity assessment (wild radish)

At 21DAT, averaged across all rates, there was no formulation difference for phytotoxicity on wild radish (means 51.2-51.4 % biomass reduction). The mean phytotoxicity of each formulation, across all rates, had increased since the 14DAT assessment.

There was a significant Formulation x Rate effect, for phytotoxicity on wild radish (P 0.0001) The formulations were similar for effect on wild radish vigour at the highest rates, although, Basta Non-selective Herbicide was less efficacious at rates of 100-300 g ai/ha (5-30% of label rate).

There was no phytotoxicity present on wild radish in the untreated control.

**Table 58. Factorial analysis of variance by formulation type, across all rates, for plant fresh weight at 21DAT (wild radish).**

| **Product** | **Fresh weight (mean g per plant)** |
|---|---|
| | **21DAT** |
| EUR Glufosinate | 10.83 a |
| Basta Non-selective Herbicide | 10.94 a |
| P-Value | 0.7365 |
| LSD (5% error) | N/A |
| CV | 16 |

**Table 59. Factorial analysis of variance by formulation x rate, for plant fresh weight at 21DAT (wild radish).**

| **Product** | **Rate (g ai/ha)** | **Fresh weight (mean g per plant)** |
|---|---|---|
| | | **21DAT** |
| Untreated Control | Nil | 15.7 a |
| EUR Glufosinate | 50 | 15.4 a |
| EUR Glufosinate | 100 | 15.0 a |
| EUR Glufosinate | 200 | 14.3 a |
| EUR Glufosinate | 300 | 12.0 a |
| EUR Glufosinate | 400 | 10.0 a |
| EUR Glufosinate | 600 | 8.4 a |
| EUR Glufosinate | 800 | 6.2 a |
| EUR Glufosinate | 1000 | 5.6 a |
| Basta Non-selective Herbicide | 50 | 14.9 a |
| Basta Non-selective Herbicide | 100 | 15.0 a |
| Basta Non-selective Herbicide | 200 | 13.5 a |
| Basta Non-selective Herbicide | 300 | 11.1 a |
| Basta Non-selective Herbicide | 400 | 10.2 a |
| Basta Non-selective Herbicide | 600 | 8.9 a |
| Basta Non-selective Herbicide | 800 | 7.2 a |
| Basta Non-selective Herbicide | 1000 | 6.8 a |
| P-Value | | 0.5351 |
| LSD (5% error) | | N/A |
| CV | | 16 |

| | | |
|---|---|---|
| DAT = Days after treatment, CV = Coefficient of variance, N/A = not applicable as p>0.05, Treatment means in columns with the same letter are no significantly different at a 5% level of accepted error. | | |

### 21DAT Plant Fresh Weight (wild radish)

The mean fresh weight of wild radish in the untreated control was 15.7 g

There was no formulation difference, across all rates, for fresh weight of wild radish (means 10.83-10.94 g

There was no significant Formulation x Rate interaction, for fresh weight of wild radish (P 0.5351).

### Conclusion (wild radish)

The aim of this study was to compare the Formulation and Formulation x Rate interaction of Basta^{®} Non-selective Herbicide and EUR Glufosinate, when foliar applied, at a range of rates up to and including the Basta label rate, on the vegetative vigour and biomass of wild radish.

A factorial analysis of variance (FAOV) showed there was no difference between formulation, across all rates, at 7, 14 and 21DAT.

A FAOV showed there was no difference between Formulation x Rate at 7, or 14DAT. At 21DAT, the Formulation x Rate was equivalent for rates 30-100% of the label rate, and Basta Non-selective Herbicide was less efficacious on wild radish at lower rates.

A FAOV showed there was no difference between Formulation or Formulation x Rate for wild radish fresh weight at 21DAT.

The two products were bioequivalent for the control of wild radish.

## Claims

1. An aqueous solution concentrate of glufosinate-ammonium comprising;
at least 28 wt% glufosinate-ammonium;
at least one alkylether sulfate surfactant;
at least one alkyl glycoside; and
propylene glycol monomethyl ether; and
wherein the weight ratio of glufosinate-ammonium/water is at least 0.9, the weight ratio of alkyl glycoside/alkylether sulfate surfactant is 0.5 to 0.9 and the weight ratio of glufosinate-ammonium/propylene glycol monomethyl ether is 2.5 to 12.

2. The aqueous solution concentrate of claim 1, wherein the weight ratio of glufosinate-ammonium / alkyl glycoside is in the range 2 to 5.

3. The aqueous solution concentrate of claim 1, wherein the weight ratio of glufosinate-ammonium / propylene glycol monomethyl ether is in the range of 3 to 12, preferably 4 to 10.

4. The aqueous solution concentrate of claim 1, wherein the weight ratio of glufosinate-ammonium / water is in the range of 0.9 to 1.5, preferably 1.0 to 1.3.

5. The aqueous solution concentrate of claim 1, wherein the weight ratio of alkyl glycoside / water is in the range of 0.25 to 0.55.

6. The aqueous solution concentrate of any one of the previous claims, wherein the weight ratio of glufosinate-ammonium / alkylether sulfate surfactant is in the range 1.2 to 3, preferably 1.5 to 2.1.

7. The aqueous solution concentrate of any one of the previous claims, wherein the weight ratio of propylene glycol monomethyl ether/ water is in the range 0.08 to 0.75.

8. The aqueous solution concentrate of any one of the previous claims, wherein: the at least one alkylether sulfate surfactant is a sodium C₈₋₁₆ alkylether sulfate, preferably sodium laurylether sulfate; and the at least one alkyl glycoside is (C₈₋₁₂ alkyl)glycoside, preferably decyl glycoside.

9. The aqueous solution concentrate of any one of the previous claims, wherein the glufosinate-ammonium is present in an amount of 30 wt% to 40 wt%.

10. The aqueous solution concentrate of any one of the previous claims, wherein the weight ratio of total surfactant to glufosinate-ammonium is 0.6 to 1.2, preferably 0.7 to 1.25.

11. The aqueous solution concentrate of glufosinate-ammonium of any one of the previous claims, comprising;
28 wt% to 40 wt% glufosinate-ammonium;
3 wt% to 13 wt% propylene glycol monomethyl ether;
8 wt% to 20 wt% decylglycoside;
12 wt% to 30 wt% sodium laurylether sulfate; and
20 wt% to 35 wt% water.

12. The aqueous solution concentrate of glufosinate-ammonium of any one of the previous claims, comprising;
30 wt% to 40 wt% glufosinate-ammonium;
3 wt% to 10 wt% propylene glycol monomethyl ether;
8 wt% to 16 wt% decylglycoside;
14 wt% to 26.5wt% sodium laurylether sulfate; and
23 wt% to 35 wt% water.

13. The aqueous solution concentrate of any one of the previous claims comprising;
30 wt% to 35 wt% glufosinate-ammonium;
3.5 wt% to 4 wt% propylene glycol monomethyl ether;
8 wt% to 12 wt% decylglycoside;
15 wt% to 20 wt% sodium laurylether surfactant;
25 wt% to 35 wt% water;
optionally ethanol in an amount of up to 5wt%; and
optionally siloxane antifoam agent in an amount of up to 1.5 wt%.

14. The aqueous solution concentrate of any one of the previous claims, wherein at least 80% of the glufosinate is in the form of the L-enantiomer.

15. A method of controlling weeds comprising applying to the weeds or to their locus an effective amount of a composition of any one of the previous claims, wherein the weeds preferably comprise one or more selected from the group consisting of annual ryegrass, sowthistle, volunteer wheat, couch grass, barnyard grass and wild radish.

## Patentansprüche

1. Wässriges Lösungskonzentrat von Glufosinat-Ammonium, umfassend:
mindestens 28 Gew.-% Glufosinat-Ammonium;
mindestens ein Alkylethersulfat-Tensid;
mindestens ein Alkylglycosid; und
Propylenglycolmonomethylether; und
wobei das Gewichtsverhältnis von Glufosinat-Ammonium/Wasser mindestens 0,9 beträgt, das Gewichtsverhältnis von Alkylglycosid/Alkylethersulfat-Tensid 0,5 bis 0,9 beträgt und das Gewichtsverhältnis von Glufosinat-Ammonium/Propylenglycolmonomethylether 2,5 bis 12 beträgt.

2. Wässriges Lösungskonzentrat nach Anspruch 1, wobei das Gewichtsverhältnis von Glufosinat-Ammonium / Alkylglycosid in dem Bereich von 2 bis 5 liegt.

3. Wässriges Lösungskonzentrat nach Anspruch 1, wobei das Gewichtsverhältnis von Glufosinat-Ammonium / Propylenglycolmonomethylether in dem Bereich von 3 bis 12, vorzugsweise 4 bis 10 liegt.

4. Wässriges Lösungskonzentrat nach Anspruch 1, wobei das Gewichtsverhältnis von Glufosinat-Ammonium / Wasser in dem Bereich von 0,9 bis 1,5, vorzugsweise 1,0 bis 1,3 liegt.

5. Wässriges Lösungskonzentrat nach Anspruch 1, wobei das Gewichtsverhältnis von Alkylglycosid / Wasser in dem Bereich von 0,25 bis 0,55 liegt.

6. Wässriges Lösungskonzentrat nach einem jeglichen der vorhergehenden Ansprüche, wobei das Gewichtsverhältnis von Glufosinat-Ammonium / Alkylethersulfat-Tensid in dem Bereich von 1,2 bis 3, vorzugsweise 1,5 bis 2,1 liegt.

7. Wässriges Lösungskonzentrat nach einem jeglichen der vorhergehenden Ansprüche, wobei das Gewichtsverhältnis von Propylenglycolmonomethylether / Wasser in dem Bereich von 0,08 bis 0,75 liegt.

8. Wässriges Lösungskonzentrat nach einem jeglichen der vorhergehenden Ansprüche, wobei:
das mindestens eine Alkylethersulfat-Tensid ein Natrium-C₈₋₁₆-Alkylethersulfat, vorzugsweise Natriumlaurylethersulfat ist; und das mindestens eine Alkylglycosid (C₈₋₁₂-Alkyl)glycosid, vorzugsweise Decylglycosid ist.

9. Wässriges Lösungskonzentrat nach einem jeglichen der vorhergehenden Ansprüche, wobei das Glufosinat-Ammonium in einer Menge von 30 Gew.-% bis 40 Gew.-% vorhanden ist.

10. Wässriges Lösungskonzentrat nach einem jeglichen der vorhergehenden Ansprüche, wobei das Gewichtsverhältnis von Gesamttensid zu Glufosinat-Ammonium 0,6 bis 1,2, vorzugsweise 0,7 bis 1,25 beträgt.

11. Wässriges Lösungskonzentrat von Glufosinat-Ammonium nach einem jeglichen der vorhergehenden Ansprüche, umfassend:
28 Gew.-% bis 40 Gew.-% Glufosinat-Ammonium;
3 Gew.-% bis 13 Gew.-% Propylenglycolmonomethylether;
8 Gew.-% bis 20 Gew.-% Decylglycosid;
12 Gew.-% bis 30 Gew.-% Natriumlaurylethersulfat; und
20 Gew.-% bis 35 Gew.-% Wasser.

12. Wässriges Lösungskonzentrat von Glufosinat-Ammonium nach einem jeglichen der vorhergehenden Ansprüche, umfassend:
30 Gew.-% bis 40 Gew.-% Glufosinat-Ammonium;
3 Gew.-% bis 10 Gew.-% Propylenglycolmonomethylether;
8 Gew.-% bis 16 Gew.-% Decylglycosid;
14 Gew.-% bis 26,5 Gew.-% Natriumlaurylethersulfat; und
23 Gew.-% bis 35 Gew.-% Wasser.

13. Wässriges Lösungskonzentrat nach einem jeglichen der vorhergehenden Ansprüche, umfassend:
30 Gew.-% bis 35 Gew.-% Glufosinat-Ammonium;
3,5 Gew.-% bis 4 Gew.-% Propylenglycolmonomethylether;
8 Gew.-% bis 12 Gew.-% Decylglycosid;
15 Gew.-% bis 20 Gew.-% Natriumlaurylether-Tensid;
25 Gew.-% bis 35 Gew.-% Wasser;
optional Ethanol in einer Menge von bis zu 5 Gew.-%; und
optional Siloxan-Antischaummittel in einer Menge von bis zu 1,5 Gew.-%.

14. Wässriges Lösungskonzentrat nach einem jeglichen der vorhergehenden Ansprüche, wobei mindestens 80% des Glufosinats in der Form des L-Enantiomers vorliegen.

15. Verfahren zum Bekämpfen von Unkraut, umfassend ein Aufbringen auf das Unkraut oder auf dessen Standort einer wirksamen Menge einer Zusammensetzung nach einem jeglichen der vorhergehenden Ansprüche, wobei das Unkraut vorzugsweise eines oder mehrere umfasst, das/die aus der Gruppe ausgewählt ist/sind, die aus Einjährigem Weidelgras, Gänsedistel, Durchwuchsweizen, Quecke, Hühnerhirse und Acker-Rettich besteht.

## Revendications

1. Concentré de solution aqueuse de glufosinate-ammonium comprenant :
au moins 28 % en poids de glufosinate-ammonium ;
au moins un tensioactif sulfate d'alkyléther ;
au moins un alkylglycoside ; et
l'éther monométhylique de propylène glycol ; et
dans lequel le rapport pondéral glufosinate-ammonium/eau est d'au moins 0,9, le rapport pondéral alkylglycoside/tensioactif sulfate d'alkyléther est de 0,5 à 0,9 et le rapport pondéral glufosinate-ammonium/éther monométhylique de propylène glycol est de 2,5 à 12.

2. Concentré de solution aqueuse de la revendication 1, dans lequel le rapport pondéral glufosinate-ammonium/alkylglycoside est compris dans la plage de 2 à 5.

3. Concentré de solution aqueuse de la revendication 1, dans lequel le rapport pondéral de glufosinate-ammonium/éther monométhylique de propylène glycol est compris dans la plage de 3 à 12, de préférence de 4 à 10.

4. Concentré de solution aqueuse de la revendication 1, dans lequel le rapport pondéral glufosinate-ammonium/eau est compris dans la plage de 0,9 à 1,5, de préférence de 1,0 à 1,3.

5. Concentré de solution aqueuse de la revendication 1, dans lequel le rapport pondéral alkylglycoside/eau est compris dans la plage de 0,25 à 0,55.

6. Concentré de solution aqueuse de l'une quelconque des revendications précédentes, dans lequel le rapport pondéral glufosinate-ammonium/tensioactif sulfate d'alkyléther est compris dans la plage de 1,2 à 3, de préférence de 1,5 à 2,1.

7. Concentré de solution aqueuse de l'une quelconque des revendications précédentes, dans lequel le rapport pondéral éther monométhylique de propylène glycol/eau est compris dans la plage de 0,08 à 0,75.

8. Concentré de solution aqueuse de l'une quelconque des revendications précédentes, dans lequel :
l'au moins un tensioactif sulfate d'alkyléther est un sulfate d'alkyléther en C₈₋₁₆ de sodium, de préférence le sulfate de lauryléther de sodium ; et l'au moins un alkylglycoside est un (alkyl en C₈₋₁₂)glycoside, de préférence le décylglycoside.

9. Concentré de solution aqueuse de l'une quelconque des revendications précédentes, dans lequel le glufosinate-ammonium est présent en une quantité de 30 % en poids à 40 % en poids.

10. Concentré de solution aqueuse de l'une quelconque des revendications précédentes, dans lequel le rapport pondéral du tensioactif total au glufosinate-ammonium est de 0,6 à 1,2, de préférence de 0,7 à 1,25.

11. Concentré de solution aqueuse de glufosinate-ammonium de l'une quelconque des revendications précédentes, comprenant :
28 % en poids à 40 % en poids de glufosinate-ammonium ;
3 % en poids à 13 % en poids d'éther monométhylique de propylène glycol ;
8 % en poids à 20 % en poids de décylglycoside ;
12 % en poids à 30 % en poids de sulfate de lauryléther de sodium ; et
20 % en poids à 35 % en poids d'eau.

12. Concentré de solution aqueuse de glufosinate-ammonium de l'une quelconque des revendications précédentes, comprenant :
30 % en poids à 40 % en poids de glufosinate-ammonium ;
3 % en poids à 10 % en poids d'éther monométhylique de propylène glycol ;
8 % en poids à 16 % en poids de décylglycoside ;
14 % en poids à 26,5 % en poids de sulfate de lauryléther de sodium ; et
23 % en poids à 35 % en poids d'eau.

13. Concentré de solution aqueuse de l'une quelconque des revendications précédentes comprenant :
30 % en poids à 35 % en poids de glufosinate-ammonium ;
3,5 % en poids à 4 % en poids d'éther monométhylique de propylène glycol ;
8 % en poids à 12 % en poids de décylglycoside ;
15 % en poids à 20 % en poids de tensioactif de lauryléther de sodium ;
25 % en poids à 35 % en poids d'eau ;
éventuellement de l'éthanol en une quantité allant jusqu'à 5 % en poids ; et
éventuellement un agent antimousse à base de siloxane en une quantité allant jusqu'à 1,5 % en poids.

14. Concentré de solution aqueuse de l'une quelconque des revendications précédentes, dans lequel au moins 80 % du glufosinate est sous la forme de l'énantiomère L.

15. Procédé de lutte contre les mauvaises herbes comprenant l'application aux mauvaises herbes ou à leur emplacement d'une quantité efficace d'une composition de l'une quelconque des revendications précédentes, dans lequel les mauvaises herbes comprennent de préférence l'un ou plusieurs choisis dans le groupe constitué par l'ivraie multiflore, le laiteron, le blé spontané, le chiendent, le pied-de-coq et le radis sauvage.
